# EUROPEAN PATENT SPECIFICATION

(11) **EP 4 263 650 B1**
(45) Date of publication and mention of the grant of the patent: **29.01.2025**
(21) Application number: 21816486.1
(22) Date of filing: 01.12.2021
(51) Int. Cl.: C08G 18/08, C09D 175/16, C08G 18/75, C08G 18/72, C08G 18/73, C08G 18/79, C08G 18/67, C08G 18/68

(54) **AQUEOUS BIO-BASED ENERGY CURABLE POLYURETHANE COMPOSITION**
WÄSSRIGE BIO-BASIERTE ENERGIEHÄRTBARE POLYURETHANZUSAMMENSETZUNG
COMPOSITION DE POLYURÉTHANE DURCISSABLE PAR ÉNERGIE À BASE BIOLOGIQUE AQUEUSE

(30) Priority: 18.12.2020 EP 20215276
(43) Date of publication of application: 25.10.2023
(73) Proprietor: Allnex Belgium, S.A., 1620 Drogenbos (BE)
(72) Inventor: TIELEMANS, Michel, 1780 Wemmel (BE)
(74) Representative: Neirynck, Katrien Gerda Noëlla
(86) International application number: PCT/EP2021/083702
(87) International publication number: WO 2022/128462

(56) References cited:
- EP-A1- 3 572 474
- WO-A1-2007/118781
- WO-A1-2009/134388
- WO-A1-2015/165902
- WO-A1-2017/067633

## Description

Current invention is related to an aqueous bio-based energy-curable polyurethane composition, a coating, ink or overprint varnish comprising such composition and a method for coating a surface with such composition.

Water-based and energy-curable polymers were merged over the years with the development of novel energy-curable polyurethane dispersions (often called UV-PUDs). These products re-combine in one single basket the substantial benefits of their parent technologies and boost coating sustainability to the next level of requirements. They respond to the environmental regulations due to their waterborne nature and their low level of volatile organic compounds. Their minimum film formation temperature (MFFT) is low and does not require the use of additional coalescing solvents that contribute to an increased air emission.

Most of the UV-PUDs on the market are still based on raw materials that are coming from fossil resources. To obtain more environmental-friendly compounds, petrochemical resources are replaced by natural raw materials. Biobased compounds, or compounds based on raw materials from renewable sources, are materials that are composed of biomass and that can be continually replenished by short- to medium-term regeneration. Biomass is a material of biological origin excluding material embedded in geological formations and/or fossilized; very often it is related to plants.

Besides their strong contribution to circularity, the use of bio-polymers is providing a significant material carbon footprint reduction that can be expressed in g CO₂ per kg of polymer. There is a big concern about the massive increase of greenhouse gas in the atmosphere (particularly carbon dioxide from human transformation of fossil resources - that takes about one million years to be re-stored in earth). The usage of renewable carbon addresses the cycle imbalance with a neutral carbon footprint proposition, considering that the CO₂ released in the atmosphere is coming from the same quantity of CO₂ fixation by plants during their photo-synthesis.

Some UV PUDs having biobased raw materials are already present on the market. However, it is desirable to obtain UV PUDs with a very high biogenic carbon content conferring strong sustainable properties and that are able to provide good coating performances with a high durability and an increased sustainability impact. Furthermore, it is desirable to use safer raw materials by e.g. avoiding the use of tin catalyst, bisphenol A or alkoxylated alkyl phenol emulsifiers, to obtain a more sustainable UV-PUD.

Therefore, it is an object of the invention to obtain biobased UV-PUDs to solve some or all of the problems mentioned herein.

The applicant has now surprisingly found aqueous energy curable polyurethanes having high biogenic carbon content that are able to provide coatings with good performances such as nail scratch resistance and solvent resistance, while preserving a low MFFT and a low VOC.

Accordingly, a first aspect of the invention is related to an aqueous bio-based energy-curable polyurethane composition comprising:
at least one ethylenically unsaturated polyurethane pre-polymer (A) obtained from the reaction of:
   - at least one aliphatic, cycloaliphatic or aromatic polyisocyanate compound (Ai),
   - at least one hydrophilic compound (Aii) containing at least one reactive group capable to react with an isocyanate and which is capable to render the polyurethane pre-polymer dispersible in an aqueous medium either directly or after the reaction with an organic or inorganic neutralizing agent to provide a salt therefrom,
   - at least one ethylenically unsaturated compound (Aiii), containing essentially one reactive group capable to react with an isocyanate,
   - at least one ethylenically unsaturated compound (Aiv), containing at least two reactive groups capable to react with an isocyanate,
optionally, at least one ethylenically unsaturated compound (B) different from (Aiii) and (Aiv) having no reactive group capable to react with an isocyanate,
wherein the ethylenically unsaturated compounds (Aiii), (Aiv) and (B) have a biocarbon content of more than 20% by weight of total carbon content, and are obtained by reacting an ethylenically unsaturated compound with a compound derived from biobased sources, whereby the biocarbon content is determined using ASTM D6866 standard;
wherein the ethylenically unsaturated compound (Aiv) is prepared with from 0 and 40wt% bisphenol A, preferably without bisphenol A based on the weight of compound (Aiv); and
wherein said composition comprises a total amount of polymerizable ethylenically unsaturated groups of at least 0.5 meq/g expressed per total weight of polyurethane composition, preferably at least 1meq/g, more preferably at least 2meq/g, most preferably at least 3meq/g, the most preferably at least 4meq/g.

A second aspect of the invention is related to a process for making an aqueous bio-based energy-curable polyurethane composition comprising the steps of
(a) formation of an unsaturated polyurethane from compounds (Ai), (Aii), (Aiii), (Aiv), and optionally (Av) and (Avi), optionally in the presence of (B), optionally in the presence of a solvent;
(b) optionally, the neutralization of the unsaturated polyurethane;
(c) dispersing the composition formed in step (a) or (b) in water to form a dispersed unsaturated polyurethane;
(d) optionally, chain extension the dispersed unsaturated polyurethane containing residual isocyanate groups by reacting with compound (Avi); and
(e) optionally, stripping the process solvent under vacuum.

In another aspect, present invention relates to a coating, ink or overprint varnish prepared from the aqueous bio-based energy-curable polyurethane composition.

In yet another aspect, present invention relates to a method for coating or printing a surface with the aqueous bio-based energy-curable polyurethane composition, comprising the steps of:
- applying said composition to the surface,
- thermally drying the applied composition
- energy curing the dried composition using either low energy ultraviolet light (LED) or high-energy ultraviolet light, including excimer light, in the presence of photo-initiators and/or exposure to high-energy electron beam .

As used herein, the phrase "biobased compounds" or "biogenic compounds" or "compounds with carbon-content from natural or renewable resources" or "compounds having a biogenic carbon content" or " compounds having biocarbon content" can be used interchangeably and all refer to compounds sourced from or made from natural renewable resources, such as, for example, bio-mass or plant-based sources.

The use of biobased compounds can be detected by virtue of the presence of 14C carbon atoms. Carbon can be available as a mixture of 3 isotopes (12C, 13C and 14C). Fossil raw materials contain a neglectable percentage of 14C isotope due to relatively short radioactive decay (half-time being 5,730 years) as opposed to renewable raw materials that incorporate carbon from carbon dioxide in the atmosphere via the photosynthesis. This new carbon is delivering a higher and defined percentage of 14C isotope at a given moment in time as a consequence of cosmic rays in the upper atmosphere. The amount of 14C relative to 12C in view of the total amount of carbon indicates the percentage of biogenic carbon in the sample, from zero to 100%.

Currently, there exists at least two different techniques for measuring the 14C content of a sample (i) by liquid scintillation counting or (ii) by mass spectrometry in which the sample is transformed in CO₂ and then reduced to graphite for analysis in the mass spectrometer to separate the 14C atoms from the 12C atoms and determine their ratio. All these methods for measuring the 14C content of substances are clearly described in the American standards ASTM D 6866 or ASTM D 7026 as well as in the European standards EN 16785 or EN 16640.

The values of the biobased carbon content according to his invention are measured using the accelerated mass spectrometry protocol described in the standard ASTM D 6866.

According to this invention, when is mentioned that a compound has e.g. at least 20wt% biocarbon, this means that 20 wt% carbon is from biobased origin in view of the total carbon content.

In the frame of this invention, the aqueous bio-based energy-curable polyurethane composition can also be biodegradable and/or compostable and/or biocompatible. Biodegradability is the ability of the material, either as such or after energy curing, to be decomposed in smaller molecules (like water, carbon dioxide, methane and biomass) as a result of the interaction with natural microorganisms (like bacteria, algae or fungi) present in the biotope.

Compostability is the ability of the material, either as such or after energy curing, to be used in compost, i.e. to be assimilated in the aerobic biological process converting organic waste in a stabilized decayed material used for fertilizing and conditioning land.

Biocompatibility is the ability of the material, either as such or after energy curing, to be compatible with living tissue. Biocompatible materials do not produce a toxic or immunological response when exposed to human or animal body or bodily fluids and can be used as (or part of) implants, protheses or any other functional substitute in a living body.

Products can be tested for biodegradability and compostability. For instance, those products featuring the "OK compost industrial" label from TUV AUSTRIA are guaranteed as biodegradable in an industrial composting plant according to the harmonized EN 13432: 2000 standard. Similarly, the "OK biodegradable" label can be attributed to soil, water and marine environments based on specific test protocols. As used herein, "ethylenically unsaturated compound" refers to a compound comprising a polymerizable ethylenically unsaturated group. By polymerizable ethylenically unsaturated group is meant a carbon-carbon double bond which under influence of an initiator and/or irradiation, eventually in the presence of a photoinitiator, can undergo radical polymerization. The polymerizable ethylenically unsaturated groups are generally chosen from (meth)acrylic groups, preferably (meth)acrylic groups, most preferably acrylic groups. In the present invention, the term "(meth)acrylic" is to be understood as to encompass both acrylic and methacrylic groups present on compounds either separately or as mixtures thereof. By "containing essentially of" is meant to designate in particular that the sum of the weight percentages of these compounds accounts for at least 95% by weight, preferably at least 97% by weight, more preferably at least 99% by weight up to 100% by weight.

As used herein an "alcohol" means both a monool and a polyol. A "monool or mono-alcohol" refers to a compound comprising one hydroxyl group (OH); a "polyol" refers to a compound comprising at least two hydroxyl (OH) groups.

### Aqueous bio-based energy curable composition

The aqueous bio-based energy curably composition comprising a polyurethane pre-polymer (A) and optionally an ethylenically unsaturated compound (B), can be an aqueous dispersion, i.e. solid particles in water, or an aqueous emulsion, i.e. liquid droplets in water. It can also coexist as a mixture between a dispersion and an emulsion.

The aqueous bio-based energy curably compositions contain at least 0.5 meq of polymerizable ethylenically unsaturated groups per total weight in g of the composition. Preferably the number of polymerizable ethylenically unsaturated groups is at least 1 meq, more preferably at least 2 meq, even more preferably at least 3 meq, most preferably at least 4 meq/g of polymerizable ethylenically unsaturated groups per total weight in g of the composition.

The amount of ethylenically unsaturated groups per total weight is calculated from the known composition of the polymer (bill of material). It usually refers to the amount of (meth)acrylic acid or glycidyl(meth)acrylate present in the overall polymer composition. It can also be measured by titration. It is expressed in meq of unsaturations per g of polymer composition.

The aqueous bio-based energy curably composition of the invention generally have a total solids content of from about 30 to 65 wt%, preferably from about 35 to 50 wt%, most preferably from about 35 to 40 wt%.

The aqueous bio-based energy curably composition has typically a viscosity measured at 25°C of 10 to 1,000 mPa s, preferably 10 to 200 mPa s, most preferably 10 to 100 mPa.s; a pH value of 6 to 9, preferably of 7 to 8, an average particle size of about 10 to 1000 nm, preferably 50 to 150 nm, most preferably 50 to 100 nm.

In one embodiment the aqueous bio-based energy-curable polyurethane composition has a biocarbon content of more than 20%, preferably above 40%, more preferably above 50%, even more preferably above 60%, most preferably above 70%, the most preferably above 80% by weight of the total carbon content of the polyurethane composition. At least compounds (Aiii) and (Aiv) have a biocarbon content of at least 20% by weight. It is preferred that also the other compounds used for making the polyurethane pre -polymer (A) have a biocarbon content of at least 20% by weight. Also the optional ethylenically unsaturated compound (B) has a biocarbon content of more than 20% by weight.

The aqueous bio-based energy curable composition according to this invention has a material carbon footprint reduction of at least 250 g CO₂/g, preferably at least 500 g CO₂/kg, more preferably at least 750 g CO₂/Kg, most preferably at least 1000 g CO₂/Kg the most preferably at least 1500 g CO₂/Kg

The aqueous bio-based energy curable composition according to this invention has a low MFFT, preferably a MFFT of between 0 and 20 °C, more preferably between 0 and 10 °C, most preferably between 0 and 5°C.

The weight average molecular weight (Mw) of the polyurethane pre-polymer (A) of the invention preferably is below 100,000 Daltons, typically below 20,000 Daltons, more typically below 10,000 Daltons. In general the weight average molecular weight (Mw) is at least 1.000 Daltons, usually at least 2,000 Daltons, typically at least 3,000 Daltons. Molecular weights typically are determined by gel permeation chromatography (GPC) using polystyrene standards covering the measurement range. Samples are typically dissolved in tetrahydrofuran prior to filtration and injection into the chromatographic column.

The following paragraphs describe embodiments of the different compounds that can be used for making the pre-polymer A.

### Polyisocyanate compound (Ai)

By polyisocyanate compounds (Ai) is meant to designate organic compounds comprising at least two isocyanate groups. Preferably, the polyisocyanate compound comprises not more than three isocyanate groups. The polyisocyanate compound (Ai) is most preferably a di-isocyanate.

The polyisocyanate compound is generally selected from aliphatic, cycloaliphatic, aromatic and/or heterocyclic polyisocyanates or combinations thereof.

Examples of aliphatic and cycloaliphatic polyisocyanates are 1,6-diisocyanatohexane (HDI), 1,1'-methylene bis[4-isocyanatocyclohexane] (H12MDI), 5-isocyanato-1-isocyanatomethyl-1,3,3-trimethylcyclohexane (isophorone diisocyanate, IPDI) and 1,3-diisocyanatomethyl cyclohexane (H6XDI). Aliphatic polyisocyanates containing more than two isocyanate groups are for example the cyclic derivatives of above mentioned diisocyanates like 1,6-diisocyanatohexane biuret and isocyanurate.

Examples of aromatic polyisocyanates are 2,4-toluene diisocyanate (TDI), 1,1'-methylenebis[4-isocyanatobenzene] (MDI), m-xylilene diisocyanate (XDI), tetramethylxylilene diisocyanate (TMXDI), 1,5-naphtalene diisocyanate (NDI), 4,4'-dibenzyl diisocyanate (DBDI), tolidine diisocyanate (TODI) and 1,4-phenylene diisocyanate (PPDI).

The polyisocyanate is preferably selected from aliphatic and cycloaliphatic polyisocyanates. An example hereof is 1,1'-methylene bis[4-isocyanatocyclohexane] (H12MDI).

Most preferably, the polyisocyanate (Ai) is biobased having a biocarbon content of more than 20% by weight. A preferred biobased polyisocyanate (Ai) that is used is pentane diisocyanate or a derivative from pentane diisocyanate. The derivative from pentane diisocyanate can be a trimerization or oligomerization product of pentane diisocyanate like an isocyanurate, a biuret, an allophanate or an oligomer, all straight or partially blocked.

Examples of such polyisocynate (Ai) based on biobased pentane diisocyanates and already on the market are Desmodur^{®} ECO N 7300, Stabio^{®} D-370N or Stabio^{®} D-376N. Another example of polyisocyanate (Ai) is Tolonate^{™} X FLO 100.

Preferably, the polyisocyanate (Ai) is provided from the partial reaction of an alcohol compound (Aia) having on average one hydroxyl function per molecule with a polyisocyanate (Aib). The alcohol compound (Aia) comprises preferably a biobased content of more than 20wt%. A preferred polyisocyanate (Aib) that is used is based on biobased pentane diisocyanate. The most preferred polyisocyanate (Aib) is Desmodur^{®} ECO N 7300, Stabio^{®} D-370N or Stabio^{®} D-376N.

The alcohol compound (Aia) is most preferably used to decrease the functionality of the polyisocyanate to a level of two isocyanate functionalities per molecule prior to the reaction with (Aii), (Aiii), (Aiv) and if present (Av) and (Avi). The alcohol compound (Aia) has on average one hydroxyl function per molecule and can be a primary, secondary or tertiary alcohol. The structure of (Aia) is R-OH, wherein the group R can be aliphatic, cycloaliphatic or aromatic.

Preferably, the alcohol compound (Aia) is biobased having a renewable carbon content of more than 20wt %. Preferred examples of such biobased alcohol compounds (Aia) are bio-based methanol, ethanol, propanol, butanol, pentanol, hexanol, heptanol, octanol, decanol, undecanol, dodecanol or octadecanol.

The amount of polyisocyanate compound (Ai) used for the synthesis of the polyurethane prepolymer (A) is generally in the range of from 10 to 60wt% of the polyurethane prepolymer (A), preferably from 20 to 50wt% and more preferably from 30 to 40wt%.

### Hydrophilic compound (Aii)

The hydrophilic compound (Aii) contains at least one reactive group capable to react with an isocyanate and which is capable to render the polyurethane pre-polymer A dispersible in an aqueous medium either directly or after the reaction with an organic or inorganic neutralizing agent to provide a salt therefrom.

The hydrophilic compound (Aii) is generally a mono-alcohol or a polyol comprising a functional group that can exhibit an ionic or non-ionic hydrophilic nature. Preferably it is a polyol containing one or more anionic salt groups, such as carboxylate, sulfonate and phosphonate salt groups or acid groups which may be converted to an anionic salt group, such as carboxylic acid, sulfonic acid or phosphonic acid groups. Preferred are hydroxycarboxylic acids represented by the general formula (HO)ₓR(COOH)_{y}, wherein R represents a straight or branched hydrocarbon residue having 1 to 36 carbon atoms, preferably 2 to 6 carbon atoms, and x and y independently are integers from 1 to 3. Examples of these hydroxycarboxylic acids include biobased citric acid, malic acid, glycolic acid, lactic acid and tartaric acid. Another example is biobased 10,16 dihydroxyhexadecanoic acid. The preferred hydroxycarboxylic acids are the α,α-dimethylolalkanoic acids, wherein x=2 and y=1 in the above general formula, such as for example, 2,2-dimethylolpropionic acid and 2,2-dimethylolbutanoic acid. The most preferred is 2,2-dimethylolpropionic acid. The hydrophilic compound (Aii) can be a nonionic component selected from hydroxylated polyethyleneoxide polymers or hydroxylated polyethyleneoxide-co-polypropyleneoxide bloc copolymers, which are preferably biobased. An example of such hydroxylated polyethyleneoxide polymers is YMER^{®} N120.

Preferably, the hydrophilic compound (Aii) has a biocarbon content of more than 20% by weight in view of the total carbon content of compound (Aii).

The amount of hydrophilic compound (Aii) used for the synthesis of the polyurethane pre-polymer (A) is generally in the range from 1 to 30wt% in view of the total weight of the polyurethane pre-polymer (A), preferably of from 2 to 10% by weight, most preferably from 3 to 6% by weight.

### Biobased ethylenically unsaturated compound (Aiii) (Aiv) and (B)

By ethylenically unsaturated compound (Aiii) containing essentially one reactive group capable to react with an isocyanate is meant to designate in the present invention compounds comprising at least one unsaturated function, such as acrylic or methacrylic group, and one nucleophilic function capable of reacting with an isocyanate, preferably a hydroxyl group. Preferred are (meth)acryloyl mono-hydroxy compounds, more particularly poly(meth)acryloyl mono-hydroxy compounds. Acrylates are particularly preferred. Allylic groups are an option.

By ethylenically unsaturated compound (Aiv) containing at least two reactive group capable to react with isocyanate groups is meant to designate in the present invention compounds comprising at least one unsaturated function such as acrylic or methacrylic group and at least two nucleophilic functions capable of reacting with an isocyanate, preferably hydroxyl groups. Preferred are (meth)acryloyl poly-hydroxy compounds, more particularly poly(meth)acryloyl poly-hydroxy compounds. Acrylates are particularly preferred. Allylic groups are an option.

According to this invention the ethylenically unsaturated compound (Aiii) and (Aiv) are biobased and each comprise at least 20wt% of biocarbon content, preferably at least 25wt%, more preferably at least 40wt%, most preferably at least 60w% and the most preferably at least 80w%.

The ethylenically unsaturated compound (Aiii) and (Aiv) and/or (B) is obtainable by reacting a compound comprising at least one ethylenically unsaturated function with a reactive biobased compound to form the ethylenically unsaturated compound (Aiii) having essentially one nucleophilic function capable of reacting with an isocyanate, to form the ethylenically unsaturated compound (Aiv) having at least two nucleophilic functions capable of reacting with an isocyanate or to form the ethylenically unsaturated compound (B) having no having nucleophilic functions capable of reacting with an isocyanate. Also the compound comprising at least one unsaturated function can be biobased. Preferably the reactive biobased compound is a hydroxyl or an epoxy compound.

The compound comprising at least one ethylenically unsaturated function can be a carboxylic acid or an ester thereof or an ethylenically unsaturated epoxide.

The reaction is typically a direct esterification reaction. When an ester of the ethylenically unsaturated carboxylic acid compound is used, then the reaction is a transesterification reaction.

Preferably, the ethylenically unsaturated carboxylic acid compound is selected from the group consisting of acrylic acid, methacrylic acid, maleic acid, fumaric acid, itaconic acid, crotonic acid, citraconic acid, cinnamic acid, aconitic acid, or a mixture thereof.

Preferably, the ethylenically unsaturated epoxide is a glycidyl(meth)acrylate.

The reactive biobased compounds are preferably selected from the group consisting of organic oils or organic oil derivatives, carboxylic acid compounds, fatty acids and derivatives, fatty acid dimers and derivatives, and biobased polyols and derivatives thereof.

Biobased polyols can be aliphatic, cycloaliphatic or aromatic polyols. They include fatty alcohols, fatty alcohol dimers, carbohydrates, sugar alcohols and derivatives thereof. Examples of other types of biobased polyols are rosin polyols, (poly)farnesene polyols, (poly)alkylene glycols and (poly)alkylene polyols. Other biobased polyols can also be trimethylolpropane, ditrimethylolpropane, pentaerythritol, dipentaerythritol. Examples of (poly)alkylene glycols are diethylene glycol, triethylene glycol, dipropylene glycol, tripropylene glycol, tetraethylene glycol.

Biobased polyol derivatives are preferably glycolide, lactide, lactone, poly(alkyleneoxide), such as poly(ethyleneoxide) or poly(propyleneoxide) derivatives of the polyols. An example therefrom is sorbitol poly(propyleneoxide) .

The organic oil or the organic oil derivative is preferably a biobased epoxidized oil, that is preferably selected from the group consisting of epoxidized soybean oil, epoxidized linseed oil, epoxidized castor oil, epoxidized coconut oil, epoxidized corn oil, epoxidized cottonseed oil, epoxidized olive oil, epoxidized palm oil, epoxidized peanut oil, epoxidized sunflower oil, epoxidized safflower oil, epoxidized tall oil, epoxidized cashew shell oil, or a biobased epoxidized fatty acid thereof. Typically the biobased epoxidized oil is reacted with an ethylenically unsaturated molecule bearing at least one carboxylic acid, like (meth)acrylic acid.

Preferably, the organic oil derivative is a cardanol derivatives. Known examples are epoxidized cardanol derivatives like for example Cardolite^{®} Ultralite 513 or Cardolite^{®} NC 514SG. An example of other biobased polyol derivative is are epoxidized rosins like for example Altamer^{®} RTE. Other substitutes for these organic oil derivatives are for instance glycidyl esters of versatic acid, like Cardura^{®} E10P, or biobased epoxyfunctional polyethers based on glycerol, like Araldite^{®} DY-S.

The biobased fatty acid or fatty acid dimer are preferably biobased aliphatic, cycloaliphatic or aromatic carboxylic acid compounds. Examples are monocarboxylic fatty acids such as butanoic acid, hexanoic acid, octanoic acid, decanoic acid and poly-carboxylic fatty acids such as butanedioic acid, pentanedioic acid, hexanedioic acid, octanedioic acid, nonanedioic acid, decanedioic acid, dodecanedioic acid.

Suitable biobased carboxylic acid compounds preferably contain more than one carboxylic acid. Examples thereof are maleic acid, fumaric acid, glutaconic acid, phtalic acid, isophtalic acid, terephtalic acid, citric acid or trimesic acid.

The biobased fatty acid or fatty acid dimer can be a saturated fatty acid such as butyric acid, lauric acid, palmitic acid, stearic acid; mono-unsaturated fatty acid like oleic acid; or polyunsaturated fatty acid like linoleic acid.

The biobased fatty acid dimer is obtained from the above fatty acids, in particular from the mono-unsaturated fatty acids such as oleic acid.

A particular type of biobased fatty acid derivative or fatty acid dimer derivative is a fatty alcohol or a fatty alcohol dimer that can be obtained directly from the chemical transformation of the parent fatty acid or fatty acid dimer. They can also be formed by the reaction of a fatty acid or a fatty acid dimer with a polyol such as a biobased polyol. Preferred polyols are trimethylolpropane, ditrimethylolpropane, pentaerythritol, dipentaerythritol, diethylene glycol, triethylene glycol, dipropylene glycol, tripropylene glycol, tetraethylene glycol.

Preferably, the biobased ethylenically unsaturated compound (Aiii) (Aiv) and (B) based on fatty acid or fatty acid derivatives are made by reacting a fatty acid or fatty acid dimer with a polyol in the presence of acrylic acid and methacrylic acid. A person skilled in the art knows which stoichiometry to use to provide the required hydroxyl functionality of the compounds (Aiii) or (Aiv).

The biobased fatty acid or fatty acid dimer can also react with an ethylenically unsaturated molecule bearing at least one epoxy group. An example of this molecule is glycidyl methacrylate. For instance, lauric acid can react stoichiometrically with glycidyl methacrylate or with Cardolite 513 to provide an unsaturated compound (Aiii). Alternatively, the C36 dimer of stearic acid can react stoichiometrically with glycidyl methacrylate or with Cardolite 513 to provide an unsaturated compound (Aiv).

Itaconic acid can react stoichiometrically with glycidyl methacrylate or with Cardolite 513 to provide an unsaturated compound (Aiv).

Citric acid can partially or totally react with glycidyl methacrylate or with Cardolite 513 to provide an unsaturated compound (Aiv); if there is one or several remaining carboxylic acids on the molecule, it is also an example of compound (Aii).

Alternatively 10,16 dihydroxyhexadecanoic acid can partially or totally react with glycidyl methacrylate or with Cardolite 513 to provide an unsaturated compound (Aiv); if there is one or several remaining carboxylic acids on the molecule, it is also an example of compound (Aii).

Biobased sugar alcohol or derivatives can be ethylene glycol, glycerol, diglycerol, triglycerol, erythritol, arabitol, sorbitol and their glycolide derivatives, lactide derivatives, lactone derivatives, poly(alkyleneoxide) derivatives. Other examples of biobased sugar alcohol derivatives are isosorbide, isomannide, isoidide.

Carbohydrates (or saccharides) can be polyhydroxy biobased compounds that include sugars, starch and cellulose. The saccharides can be divided into four chemical groups: monosaccharides, disaccharides, oligosaccharides, and polysaccharides. Monosaccharides and disaccharides with the lower molecular weight are referred to sugars and are preferred in the frame of this invention. Examples of monosaccharides include glucose, galactose, fructose and xylose. Examples of disaccharides include sucrose, lactose, maltose, isomaltulose and trehalose. Examples of oligosaccharides include maltodextrin, raffinose and stachyose. Examples of polysaccharides include glycogen, cellulose, hemicellulose, pectins, amylose, amylopectin and starches as well as their derivates including the bio-transformation of these products in bio-reactors in the presence of enzymes.

The ethylenically unsaturated compound (Aiii) has as amount of reactive groups capable to react with an isocyanate, also called nucleophilic function, or functionality of essentially 1. The nucleophilic function is preferably a hydroxyl group.

Examples of such compounds are hydroxyethyl(meth)acrylate, hydroxypropyl(meth)acrylate, hydroxybutyl(meth)acrylate, hydroxyethyl(meth)acrylamide, isosorbide mono(meth)acrylate, pentaerythritol tri(meth)acrylate, dipentaerythritol penta(meth)acrylate, trimethylolpropane di(meth)acrylate, ditrimethylolpropane tri(meth)acrylate, glycerol (poly)propoxylate di(meth)acrylate, diglycerol (poly)propoxylate tri(meth)acrylate, sorbitol (poly)propoxylate penta(meth)acrylate. Another example is hydroxyethyl acrylate (poly) lactide.

The ethylenically unsaturated compound (Aiv), has as amount of reactive groups capable to react with an isocyanate, also called nucleophilic function, or functionality of at least 2, preferably from 2 to 3 per compound, most preferably 2 per compound. The nucleophilic function is preferably a hydroxyl group.

Examples of such compounds are pentaerythritol di(meth)acrylate, dipentaerythritol tetra(meth)acrylate, trimethylolpropane (meth)acrylate, ditrimethylolpropane di(meth)acrylate, glycerol propoxylate (meth)acrylate, diglycerol propoxylate di(meth)acrylate, sorbitol propoxylate tetra(meth)acrylate.

It is possible that compounds (Aiii), A(iv) and (B) are obtained from lignin as biobased raw material precursor, after chemical transformation and functionalization required in the frame of this invention.

The desired functionality of (Aiii) and (Aiv) are obtained by controlling the process and the right stoichiometric ratios of the compound comprising at least one ethylenically unsaturated function and the reactive biobased compounds.

In one embodiment the amount of reactive groups isocyanate reactive groups of the ethylenically unsaturated compound (Aiv) can be controlled by reacting a portion of the isocyanate reactive group with a blocking compound capable to react with a isocyanate reactive groups and optionally to generate another functionality to the molecule. Such blocking compound is preferably a cyclic anhydride which generates a carboxylic acid group. Succinic and maleic anhydrides are particularly preferred.

This way it is possible to control the nucleophilic functionality of compounds (Aiii) or (Aiv) and it also possible to obtain a polyurethane polymer A with the desired molecular weight and amount branching without risk of gel formation.

In a particular embodiment, the biobased ethylenically unsaturated compound (Aiii) or (Aiv) and (B) is obtainable by
- reacting a natural epoxidized oil with an ethylenically unsaturated carboxylic acid compound to obtain an ethylenically unsaturated polyol;
- reacting the ethylenically unsaturated polyol with a cyclic anhydride to obtain an ethylenically unsaturated polyol with at least one carboxylic acid functional group.

In this embodiment the anhydride is preferably a cyclic anhydrides and is preferably a succinic anhydride of a maleic anhydride.

In one embodiment the ethylenically unsaturated compound (Aiii) has a hydroxyl number of between 20 and 500 mgKOH/g - such as between 40- 200 mg KOH/g.

In one embodiment the ethylenically unsaturated compound (Aiv) has a hydroxyl number of between 20 and 800 mgKOH/g - such as between 40- 200 mg KOH/g .

Preferably, compound (Aiii) and /or (Aiv) bears from 2 to 5 ethylenically unsaturated groups per molecule.

In one embodiment, the aqueous biobased energy curable polyurethane composition comprises at least one ethylenically unsaturated compound (B) different from (Aiii) and (Aiv) having no reactive group capable to react with an isocyanate the fully ethylenically unsaturated compounds (B) different from (Aiii) and (Aiv). This product is usually added to the ethylenically unsaturated polyurethane pre-polymer (A) to provide additional desired properties.

It is also possible that during the esterification reaction leading to compounds (Aiii) and (Aiv), the reaction mixture at equilibrium contains a portion in which all the reactive groups capable to react with an isocyanate, are reacted with the ethylenically unsaturated acid and are no more capable to react with an isocyanate group. These reaction products are also constituting the at least one ethylenically unsaturated compounds (B) different from (Aiii) and (Aiv) having no reactive group capable to react with an isocyanate.

In another embodiment, compound (B) can also be a biobased urethane acrylate different from prepolymer (A). A suitable biobased urethane acrylate can for instance be obtained by the full stoichiometric reaction between Desmodur^{®} ECO N 7300 and Cardolite^{®} NX7202 or between Desmodur^{®} ECO N 7300, Cardolite^{®} NX7202 and 2-ethyl-1,3-hexanediol.

The compound (B) can alternatively be added to the aqueous bio-based energy curable polyurethane composition, as such or as a separately-prepared emulsion.

The amount of compound (Aiii) generally is from 10 to 50 % by weight of the polyurethane prepolymer (A), preferably of from 25 to 40 % by weight.

The amount of compound (Aiv) generally is from 10 to 50 % by weight of the polyurethane prepolymer (A), preferably of from 25 to 40% by weight.

The amount of compound (B) generally is from 0 to 50% by weight of the polyurethane composition, preferably 0 to 25%.

The ethylenically unsaturated compound (Aiv) is prepared with from 0-40wt% of bisphenol A, preferably from 0-20 wt% bisphenol A, most preferably without using bisphenol A. Bisphenol A is a common compound used as starting material for UV curable (meth)acrylate compositions, typically as bisphenol A diglycidyl ether diacrylate. Due to the health and the environmental pressure in relation with the toxicology and ecotoxicity of bisphenol A, its usage is avoided. Instead safer substitutes, like acrylates bases on butanediol diglycidyl ether, vanilin diglycidyl ether, isosorbide diglycidyl ether, hexanediol diglycidylether, cyclohexanedimethanol diglycidylether or heterocyclic epoxy compounds such as triglycidyl isocyanurate or other similar alternatives can be used.

From a polymer architecture standpoint, the compounds (Aiii) introduce terminal ethylenically unsaturation on the pre-polymer (A) and function as the capping molecules of the pre-polymer (A). The compounds (Aiv) having at least 2 hydroxyl groups provide chain extension and / or chain branching with lateral ethylenically unsaturations. Only the combination of both type of biobased compounds guarantees a higher level of ethylenically unsaturations resulting in a performant coating and complemented with the highest level of bio-carbon in the polymer providing the highest carbon footprint reduction as a result.

### Mono-alcohol or Polyol (Av)

In some embodiments, the aqueous bio-based curable polyurethane composition comprising the polyurethane pre-polymer (A), may further be obtained from the reaction of compounds (Ai), (Aii), (Aiii), (Aiv) and (Av).

The mono-alcohol or polyol (Av) is different from (Ai), (Aii), (Aiii) or (Aiv) and has a biocarbon content of more than 20% by weight, preferably more than 40 % by weight, even more preferably more than 60% by weight, most preferably more than 80% by weight, the most preferably more than 80% by weight and contains at least one reactive group capable to react with an isocyanate. Preferably, a polyol is used comprising at least two hydroxyl groups.

The mono-alcohol (Av) can be methanol, ethanol, propanol, isopropanol, butanol, isobutanol, tertio-butanol, pentanol, hexanol, heptanol, octanol, decanol, dodecanol, terpineol.

Preferably, compound (Av) is a polyol selected from the group consisting of an aliphatic, cycloaliphatic or aromatic diol or polyol, a biobased sugar, a biobased sugar alcohol, a fatty alcohol or a fatty alcohol dimer, a polycarbonate polyol, a polyester polyol, a polyether polyol, a polyacrylate polyol or mixtures thereof.

Preferably, the biobased sugar alcohol or derivate is an ethylene glycol, glycerol, diglycerol, erythritol, arabitol, sorbitol, isosorbide, isomannide, isoidide.

Compound (Av) can be derived from vegetable oils or starch.

Compound (Av) can also be a monoalcohol or a polyol that is (poly)ethoxylated or (poly)propoxylated, or a (poly)lactone or a (poly)lactide derivative.

Compound (Av) can be an aliphatic or cycloaliphatic diol or polyol like 1,2-ethylene glycol, 1,3-propane diol, 2,3-butane diol, 1,5-pentane diol, 1,6-hexane diol, heptane diol, octane diol, nonane diol, decane diol, dodecane diol, cyclohexane dimethanol. It can be also diethylene glycol, triethylene glycol, dipropylene glycol, tripropylene glycol, tetraethylene glycol, tetrapropyleneglycol, trimethylolpropane, ditrimethylolpropane, pentaerythritol, dipentaerythrytol.

Compound (Av) can be a polyester polyol having preferably a number average molecular weight of at least 400 Daltons and preferably not exceeding 4000 Daltons, most preferably not exceeding 1000 Daltons. The polyester polyol may also contain residual vinylic unsaturations suitable for oxidative air-drying.

The polyester polyol can be reaction of a polyol, such as the polyols describe above, with a polycarboxylic acid, preferably dicarboxylic acids. The polycarboxylic acids which may be used for the formation of these polyester polyols may be aliphatic, cycloaliphatic, aromatic and/or heterocyclic. Particular preferred dicarboxylic acids are succinic acid, adipic acid, tartaric acid, lactic acid, glycolic acid, fumaric acid, maleic acid, itaconic acid, citric acid, citraconic acid, mesaconic acid, glutaric acid, trimellitic acid, trimesic acid, pyromellitic acid, phthalic acid, terephthalic acid and importantly fatty acid dimers. Other polycarboxylic acids can be used, among them cyclic esters (like gama-butyrolactone or epsilon-caprolactone), cyclic diesters (like glycolide or lactide) or cyclic anhydride (like phthalic anhydride or maleic anhydride). In a particular case of the usage of a polyester polyol, polyhydroxyalkanoates (PHA) can be used. PHA's are polyesters produced by numerous microorganisms, including bacteria, and implying a large range of different monomers. Carbohydrates and vegetable oils are generally used as raw materials for the fermentation leading to PHA's. These polyesters can present some crystallinity and are biodegradable and compostable. They have usually a good water resistance and are thermal- and UV-stable. Hydroxylated derivates suitable in the frame of this invention can for instance be obtained by further transesterification of the polyesters.

In another particular case of the usage of a polyester polyol, linear or branched polylactic acids and derivates therefrom presenting residual hydroxyl groups can be used. Polylactic acids are bio-polymers that find increasing usage in the industry.

In still another case of the usage of a polyester polyol, linear or branched polymers made from 10,16 dihydroxyhexadecanoic acid and typically derived from cutin are also considered.

Hydroxylated derivatives of PHA and polylactic acid can also be acrylated as compound (Aiii) and/or (Aiv) in the frame of this invention.

Compound (Av) can be a polycarbonate polyol having preferably a number average molecular weight of at least 400 Daltons and not exceeding 4000 Daltons, most preferably not exceeding 1000 Daltons. Examples of polycarbonate polyols are therefore reaction products of a polyol with phosgene, dialkylcarbonates such as dimethycarbonate, with diarylcarbonates such as diphenylcarbonate or with cyclic carbonates such as ethylene and/or propylene carbonate.

Compound (Av) can be a polyether polyol having preferably a number average molecular weight of at least 400 Daltons and not exceeding 4000 Daltons, most preferably not exceeding 1000 Daltons. Examples of polyether polyol are polyethylene glycol, polypropylene glycol, polytetramethylene glycol as well as random or bloc copolymers therefrom.

Compound (Av) can also be a polyacrylate polyol having preferably a number average molecular weight of at least 400 Daltons and not exceeding 4000 Daltons, most preferably not exceeding 1000 Daltons. It can include those polymers prepared by the (living) radical polymerization of (meth)acrylic and/or (meth)acrylamide monomers for instance initiated by a hydroxylated thermal radical initiator in the presence of an hydroxylated chain transfer agent, such as 2-mercaptoethanol. Compound (Av) can also be a polyamide polyol.

It is possible that compound (Av) is obtained from lignin as biobased raw material precursor, after chemical transformation and functionalization required in the frame of this invention.

Preferred compounds (Av) are polyester polyols and polycarbonate polyols.

The mono-alcohol can be selected between methanol, ethanol, propanol, isopropanol, butanol, tert-butanol, pentanol, hexanol, cyclohexanol, heptanol, octanol, decanol, dodecanol and the like.

The total amount of polyol (Av) in the polyurethane prepolymer (A) is usually of from 0 to 50 % by weight of the polyurethane prepolymer (A), preferably of from 0 to 30 % by weight, most preferably of from 0 to 15 % by weight.

### Mono-amine or polyamine (Avi)

In some embodiments, the aqueous bio-based curable polyurethane composition is comprising the polyurethane pre-polymer (A) that may be obtained from the reaction of compounds (Ai), (Aii), (Aiii), (Aiv), optionally (Av), and (Avi).

Preferably the mono or polyamine compound (Avi) is an aliphatic, cycloaliphatic or aromatic amine, diamine or polyamine.

Compound (Avi) comprises active amino groups capable of making a chain capping or a chain extension from the remaining isocyanate end-groups of the pre-polymer. The chain extender is suitably a water-soluble aliphatic, alicyclic, aromatic or heterocyclic primary or secondary polyamine having up to 36, preferably up to 12 carbon atoms. It can also be hydrazine. The total amount of compound (Avi) used is generally calculated according to the amount of residual isocyanate groups present in the polyurethane prepolymer. The ratio of isocyanate groups in the prepolymer to the amine groups in the chain extender (Avi) during the chain extension is generally in the range of from about 1:0.9 to about 1:1, preferably from about 1:0.95 to about 1:1 on an equivalent basis. This ratio is more preferably 1:1 in order to obtain a fully reacted polyurethane polymer with no residual isocyanate groups.

The polyamine used for chain extension has preferably an average functionality of 2 to 4, more preferably 2 to 3. The preferred polyamine has an average functionality of 2. Examples of such chain extenders (Avi) useful herein comprise hydrazine, piperazine, ethylene diamine, 1,2-propylene diamine, 1,3-propylene diamine, 1,4-butanediamine, 1,5-pentanediamine, 2-methyl-pentanediamine, 1,6-hexanediamine, 1,7-heptanediamine, 1,8-octanediamine, 1,9-nonanediamine, 1,10-decanediamine, 1,12-dodecanediamine, isophorone diamine, m-xylilene diamine, bis(4-aminocyclohexyl)methane, polyoxyethylene amines and polyoxypropylene amines (e.g. Jeffamines from TEXACO), as well as mixtures thereof.

The amine used for chain capping has a functionality of 1. Examples of such amines are methylamine, dimethylamine, propylamine, isopropylamine, dipropylamine, diisopropylamine, butylamine, dibutylamine, isobutylamine, diisobutylamine, tert-butylamine, di-tert-butylamine, pentylamine, dipentylamine, hexylamine, dihexylamine, benzylamine, dibenzylamine.

In another embodiment of the invention, the amine (Avi) can bear an additional functionality like is the case with natural amino acids like glycine, alanine or lysine. Another example is the N-(3-sulfopropyl) polypropyleneglycoldiamine, sodium salt (Poly-EPS from Rashig).

Preferably the mono-amine or polyamine (Avi) is biobased and comprises a biocarbon content of at least 20 wt%, preferably at least 40 wt%, more preferably at least 60 w%, most preferably at least 80%.

An example of such biobased mono-amine or polyamines is 1,5-pentanediamine. Another example is Priamine 1073 from Croda.

Preferably no chain extender compound (Avi) is used.

### Process

Another aspect of the invention is related to a process for making an aqueous bio-based energy-curable polyurethane composition according to the invention, obtainable by a process comprising the steps of
(a) formation of an unsaturated polyurethane from compounds (Ai), (Aii), (Aiii), (Aiv), and optionally (Av) and/or (Avi), optionally in the presence of (B); optionally in the presence of a solvent;
(b) optionally the neutralization of the composition formed in step (a);
(c) dispersing the composition formed in step (a) or (b) in water to form a dispersed unsaturated polyurethane;
(d) optionally chain extending or chain capping by reacting the dispersed unsaturated polyurethane with compound (Avi); and
(e) optionally stripping of the process solvent under vacuum.

The formation of the unsaturated polyurethane in step (a) can be done in a solvent. The solvent is then removed after step (d) by stripping the solvent under vacuum at moderate temperature below 100°C.

In case the ethylenically unsaturated polyurethane pre-polymer is made using polyol (Av), then (Av) is added in step (a) to react with compounds (Ai), (Aii), (Aiii) and (Aiv).

In case the ethylenically unsaturated polyurethane pre-polymer is made using polyamine (Avi), then (Avi) can be added in step (a) to react with compounds (Ai), (Aii), (Aiii) and (Aiv) and optionally (Av).

The process can further comprise the step of the reaction with a neutralizing agent (Step b). This can be done so that the hydrophilic groups provided by compound (Aii) are converted into anionic salts.

The process can be done by reacting a stoichiometric excess of the isocyanate groups present in compound (Ai) with the isocyanate reactive groups present in compounds (Aii), (Aiii), (Aiv) and if present (Av) and (Avi).

The reactants from step (a) are generally used in proportions corresponding to an equivalent ratio of isocyanate groups provided by compound (Ai) to isocyanate reactive groups provided by compounds (Aii), (Aiii), and (Aiv) and optional (Av) and/or (Avi) in the reaction mixture, whereby the equivalent ratio is between 0.8:1 to 1.2:1, preferably from about 0.9:1 to 1.1:1, most preferably 1:1.

In case further chain capping or chain elongation occurs, the residual isocyanates can then be reacted with the optional compound (Avi).

The reaction is made preferably under substantially anhydrous conditions and at a temperature between 30°C and 100°C, more preferably between 50°C and 100°C, until the reaction between the isocyanate groups and the isocyanate-reactive groups is substantially complete. The isocyanate content can be followed by the back titration with an amine, usually dibutylamine.

The reaction may be facilitated by the addition of 5 to 40%, preferably 15 to 30%, by weight of a solvent in order to reduce the viscosity of the pre-polymer and avoid side reactions leading to undesired branching or gel formation. It is preferentially water-soluble with a low boiling water temperature (<100°C). The solvent is preferably acetone or methylethylketone.

It is common to use catalysts to accelerate the reaction of the isocyanates with the isocyanate reactive groups. Bismuth neodecanoate is preferred over dibutyltin dilaurate. Often specific inhibitors are added in order to prevent that ethylenically unsaturated groups would already react during the reaction and lead to a gel. Butylhydroxytoluene is preferred over butylhydroxyanisole, hydroquinone monomethyl ether and hydroquinone. A person skilled in the art is well aware of the type of catalysts and inhibitors that can be used to facilitate the reaction.

It is possible in the frame of this invention to use a sequential process during which compound (Ai) and/or compounds (Aiv), (Aii), (Aiii), (Av) and (Avi) are added sequentially and/or incrementally in two or several portions, or with a continuous feed. The reason for this is a better control on the exothermicity of the reaction, especially when no solvent is present. Another advantage is to control the architecture and molecular weight distribution of the polymer in a favorable way for instance to limit the viscosity.

In a special embodiment of the reaction, the remaining free isocyanate groups provided by the reaction of compound (Ai) to (Avi) are reacted intentionally to give allophanate and/or biurets groups. This provides molecular weight increase and chain branching which can be favorable for the final performance of the polymer dispersion.

The pre-polymer obtained after the reaction of (Ai), (Aii), (Aiii), (Aiv), (Av) and (Avi) if present, is first neutralized (if appropriate) and then dispersed in an aqueous medium by adding the pre-polymer into water or reversely by adding water to the pre-polymer. If compounds (B) are present, these are typically present in the pre-polymer before the neutralization and the dispersion steps. Usually this dispersion proceeds under high sheer mixing.

When the dispersion requires the preliminary neutralization of the hydrophilic groups provided by compound (Aii), such as the carboxylic acid, sulfonic acid or phosphonic acid groups into anionic salts, this is preferably done by adding an organic or inorganic neutralizing agent to the pre-polymer or the water. Suitable neutralizing agents include volatile organic tertiary amines such as trimethylamine, triethylamine, triisopropylamine, tributylamine, N,N-dimethylcyclohexylamine, N,N-dimethylaniline, N-methylmorpholine, N-ethylmorpholine, N-methylpiperazine, N-methylpyrrolidine and N-methylpiperidine. Triethylamine is preferred. Suitable neutralizing agents include non-volatile inorganic bases comprising monovalent metal cations, preferably alkali metals such as lithium, sodium and potassium and anions such as hydroxides, hydrides, carbonates and bicarbonates that do not remain in the dispersion as such. Sodium hydroxide is preferred.

The total amount of these neutralizing agents can be calculated according to the total amount of acid groups to be neutralized. The molar ratio between the acid group and the neutralization agent is from 1:0.5 to 1:1, preferably 1:0.8 to 1:1, most preferably 1:0.9 to 1:1. Generally a stoichiometric ratio of about 1:1 is used unless the buffer obtained from the partial neutralization of the week acid with a strong base is required.

Optionally, a further compound (Avi) is added comprising active amino groups capable of making a chain extension or a chain capping of the remaining isocyanate end-groups of the pre-polymer. This is generally done in the aqueous phase at a temperature between 5 and 90 °C, preferably between 15 to 30 °C. Water can act as chain extender after natural hydrolysis of the free isocyanates into the corresponding amines and consecutive chain extension with other remaining isocyanates to provide ureas.

The total amount of compound (Avi) used is generally calculated according to the amount of residual isocyanate groups present in the polyurethane prepolymer. The ratio of isocyanate groups in the prepolymer to the amine groups in the chain extender (Avi) during the chain extension is generally in the range of from about 1:0.7 to about 1:1, preferably from about 1:0.9 to about 1:1 on an equivalent basis. This ratio is more preferably 1:1 in order to obtain a fully reacted polyurethane polymer with no residual isocyanate groups.

In general, after the formation of the dispersion of the pre-polymer and when it contains a volatile solvent with a boiling point of below 100 °C, the polymer dispersion is stripped. This is usually done under reduced pressure and at a temperature between 20 and 90 °C, preferably 40 to 60 °C. Additional water is added to compensate the possible water loss during stripping and fix the desired solid content of the dispersion.

### Coating

The aqueous bio-based energy-curable polyurethane composition according to the invention provides a coating after film formation and complete evaporation of the water, followed by ultraviolet light (UV) radiation curing or electron beam (EB) radiation curing. The radiation-curable compositions according to the present invention are preferably curable by ultraviolet irradiation in the presence of a photoinitiator.

The coating has a high biocarbon content with a highly desirable material carbon footprint reduction and circularity impact. Particularly, the bio-based energy-curable polyurethane composition according to the invention provides a hard coating with a high performance level for the protection and embellishment of a large range of substrates. Between others, it provides an excellent adhesion associated to good optical properties like transparency, clarity, haze and gloss. It also has excellent mechanical and chemical resistance properties.

The present invention therefore also relates to the use of the compositions for making inks, varnishes or coatings and to a process for making inks, varnishes or coatings wherein a composition as described above is used. Digital printing (inkjet inks) and 3D printing are also particularly relevant to the invention.

The coating, ink or overprint varnish prepared from a composition according to the invention can further comprise additives such as photo-initiators, thermal crosslinkers, wetting and leveling agents, rheology modifiers, defoamers, waxes, colorants, pigments or inorganic fillers.

In the frame of this invention, it is particularly suitable to use a biobased additive. A relevant example is the use of Bayhydur ECO 701-90 as a water-dispersible biobased polyisocyanate thermal crosslinker for 2K dual curing.

The polyurethane composition can also contain any other polymer dispersions or emulsions different from the invention. Preferably, these polymer dispersions or emulsions are bio-based and contain a bio-carbon content superior to 20%, preferably superior to 40%, more preferably superior to 60%, most preferably superior to 80%. The most preferably, these polymer dispersions or emulsions are containing ethylenically unsaturated functionalities like (meth)acrylate groups.

It is for instance advantageous to add a bio-based waterborne emulsion based on the previously described natural epoxidized oil or natural epoxidized fatty acid. Epoxidized soybean oil is preferred. It is partially or fully reacted with (meth)acrylic acid to obtain an ethylenically unsaturated alcohol or polyol after the opening of the epoxy ring. The hydroxyl groups are partially or fully reacted with an anhydride to obtain an ethylenically unsaturated compound with at least one carboxylic acid functional group. The anhydride is preferably succinic anhydride. The product is then partially or fully neutralized with an organic or inorganic base. Sodium hydroxide is preferred. It is finally optionally mixed with an emulsifier. Nonionic bloc copolymer emulsifiers with an HLB value above 6 are preferred, more preferably above 8, even more preferably above 10, most preferably above 12, the most preferably above 14. When water is added to the product under high-shear agitation at ambient or moderate temperature, a stable emulsion is obtained with a solid content between 35% and 65% and with a low droplet size below 500 nm, typically below 150 nm.

The invention is also related to a method for coating a surface with the composition as described above comprising the steps of:
- applying said composition to the surface,
- thermally drying the applied composition
- energy curing the dried composition using high-energy ultraviolet light in the presence of a photo-initiator and/or exposure to high-energy electron beam .

In particular, a low-energy ultraviolet light (LED lamp) can be used advantageously. The ultraviolet light can also be provided by an excimer lamp to provide curing delivering desirable surface patterns and optical properties including low gloss.

Alternatively, the curing mechanism can also be partially or totally a thermal curing in the presence of thermal initiators well known in the state of the art, typically peroxide- or azo- compounds with a suitable half-time of decomposition at curing temperature.

The compositions according to the invention are particularly suitable for making coatings for wood furniture and plastic resilient flooring.

The examples which will follow illustrate the invention without limiting it.

### Examples

### RAW MATERIALS

IPDI = Desmodur^{®} I, isophorone diisocyanate from Covestro. Product is used as a reactant.

HDI = Desmodur^{®} H, hexane diisocyanate from Covestro. Product is used as a reactant.

N7300 = Desmodur^{®} ECO N7300, biobased pentane diisocyanate trimer from Covestro. Product is used as a reactant.

MOD1071 = biobased acrylated polyester diol with IOH ~80 mg KOH/g which is obtained by the reaction of an epoxidized soybean oil having an oxirane oxygen content of ~7% with acrylic acid and succinic anhydride. Product is used as a reactant.

MOD1010 = biobased acrylated polyether diol with IOH ~231 mg KOH/g which is obtained by the reaction of bisphenol A diglycidylether diacrylate with acrylic acid. Product is used as a reactant.

MOD450 = biobased acrylated polyester alcohol with IOH ~60 mg KOH/g which is obtained by the reaction of a fatty acid dimer having AV ~193 mgKOH/g with pentaerythritol and acrylic acid. Product is used as a reactant.

MOD706 = biobased acrylated polyester alcohol with IOH ~165 mg KOH/g which is obtained by the reaction of glycerol propoxylate having IOH ~631 mgKOH/g with acrylic acid. Product is used as a reactant.

MOD767 = biobased acrylated polyester alcohol with IOH ~117 mg KOH/g which is obtained by the reaction of hydroxyethyl acrylate with lactide. Product is used as a reactant.

AE532 = biobased methacrylated ether alcohol with IOH ~163 mg KOH/g which is obtained by the reaction of glycidyl methacrylate with lauric acid. Product is used as a reactant.

NX7202 = Cardolite^{®} GX7202 from Cardolite. Biobased cardanol-derived acrylated nono-alcohol with IOH ~145 mg KOH/g. Product is used as a reactant.

NX7216 = Cardolite^{®} NX7202 from Cardolite. Biobased cardanol-derived acrylated diol with IOH ~125 mg KOH/g. Product is used as a reactant.

NX9201 = Cardolite^{®} NX9201 from Cardolite. Biobased cardanol-derived polyether diol with IOH ~72 mg KOH/g. Product is used as a reactant.

DMPA = dimethylolpropionic acid from Perstorp. Product is used as a reactant. BUTOH = biobased butanol from Green Biologics. Product is used as a reactant. N120 = Ymer^{®} N120, polyethyleneglycol diol with IOH = 120 mg KOH/g from Perstorp. Product is used as a reactant.

PDA = 1,2 propylene diamine from Lanxess. Product is used as a reactant.

BHT = butylate hydroxyl toluene from Merisol. Product used as a radical inhibitor. BiND = Valikat^{®} Bi 2010, bismuth neodecanoate from Umicore. Product is used as a catalyst.

TEA = triethylamine from Arkema. Product is used as a neutralizer.

NaOH 30% = sodium hydroxide as a 30% solution in water from Brenntag. Product is used as a neutralizer.

SR4485 = Acticide^{®} SR4485, water-based biocide composition from Thor. Product is used as a biocide.

ACE = acetone available from Brenntag. Product is used as a process solvent.

H2O = demineralized water.

### EXAMPLE 1 LVL341

Charge reactor with 184.7 g of ACE; 219.1g of MOD1071; 25.1 g of DMPA; 140.3 g of MOD450; 44.6 g of MOD706; 0.39 g of BHT and 0.26 g of BiND. Mix the products at ambient temperature and under an agitation of 130 rpm. Heat the reactor jacket to 70 °C and start air-sparging at a level of 2 liters/kg/hour. Add five shots of 25.0 g of IPDI, each shot being followed by 1 hour of reaction under reflux with the reactor jacket maintained at 70°C. After the last maturation step, keep the reaction at reflux until the I(NCO) is reaching a plateau at ~0.30 meq/g. Cool down the reaction mixture to 50°C and stop air-sparging. Add 19.0 g of TEA to the reactor and increase stirring at 200 rpm for 15 minutes. Charge a separate dispersion vessel with 1029.0 g of H2O at ambient temperature and mix with a stirrer at a speed of 400 rpm. Transfer the pre-polymer solution in acetone at 50°C into the dispersion vessel during a period of 15 minutes to make the polymer dispersion. Decrease the agitation to 150 rpm while heating the reactor jacket to 60 °C. Increase progressively the vacuum to 100 mbar with the aid of a vacuum pump while preventing excessive foam formation. Continue the solvent stripping for about 5 hours until the ACE level is measured below 0.1%. Cool the reactor below 30°C. Add 1.6 g of SR4485 together with some additional H2O to adjust the solid content at a target of ~35% solid material. When completely homogenous, drum-off the reactor over a 100 micron sieve. The isocyanate content I(NCO) in the prepolymer reaction mixture was measured using a dibutylamine back-titration method and is expressed in meq/g. The following examples were prepared according to the adapted process of Example 1 and their detailed weight composition refer to the table 2.

### EXAMPLE 2 LVL342B

Modification of Example 1 using neutralization with NaOH 30%.

### EXAMPLE 3 LVL354

Modification of Example 1 where MOD706 is replaced by NX7202.

### EXAMPLE 4 LVL366

Modification of Example 1 where MOD706 is replaced by MOD767.

### EXAMPLE 5 LVL377

Modification of Example 1 where MOD706 is replaced by AE532.

### EXAMPLE 6 LVL360

Modification of Example 1 where DMPA is partly replaced by N120.

### EXAMPLE 7 LVL368

Modification of Example 1 where MOD1071 is replaced by NX7216.

### EXAMPLE 8 LVL369

Modification of Example 1 where IPDI is partly replaced by N7300 and BUTOH; chain extension from the reaction of residual isocyanates with PDA added to the fresh dispersion.

### EXAMPLE R1 BAYHYDROL^{®} ECO UV 2877

BAYHYDROL^{®} ECO UV 2877 as biobased market reference from Covestro with 35% bio-carbon.

### EXAMPLE R2 UCECOAT^{®} 7788

UCECOAT^{®} 7788 as biobased market reference from allnex with ~1% bio-carbon. This product is taken as an internal benchmark for an entry-performance in clear coat applications.

### EXAMPLE R3 UCECOAT^{®} 7733

UCECOAT^{®} 7733 as biobased market reference from allnex with ~5% bio-carbon. This product is taken as an internal benchmark for high-end performance in clear coat or pigmented applications.

### EXAMPLE R4 UCECOAT^{®} 7999

UCECOAT^{®} 7999 as biobased market reference from allnex with ~22% bio-carbon. This resin is made based on Aiv type of compound comprising more than 40 % Bisphenol A. This product targets a high-end performance level with a significant amount of bio-carbon inside and a strong sustainability positioning.

### EXAMPLE R5 LVL252

Modification of Example 1 where MOD1070 is replaced by MOD1010 and IPDI is partly replaced by N7300 and BUTOH. This resin is made based on compounds comprising BPA.

### EXAMPLE R6 LVL272

Modification of Example 1 where MOD1070 is replaced by NX9201.

### EXAMPLE R7 LVL277

Modification of Example 1 where MOD1070 is replaced by NX9201 and IPDI is partly replaced by N7300 and BUTOH.

### EXAMPLE R8 LVL298

Modification of Example 1 where MOD1070 is replaced by NX9201; MOD706 is replaced by NX7202; IPDI is partly replaced by HDI; TEA is replaced by NaOH 30%.

### TEST PROTOCOLS FOR LIQUID DISPERSIONS

### Solid content:

The solids content of the aqueous polymer composition was measured by gravimetry after drying 1g the dispersion during 2h at 120°C. It is expressed in %.

### Viscosity:

The viscosity of the aqueous polymer composition was measured at 25 °C with a cone and plate viscosimeter ref. Anton Paar MCR 92. It is expressed in mPa.s.

### pH:

The pH of the aqueous polymer composition was measured according to DIN EN ISO 10390.

### Average particle size:

The average particle size of the aqueous polymer composition was measured by Dynamic Light Scattering equipment ref. Malvern Particle Analyzer Processor type 7027/4600SM. It is expressed in nm.

### Minimum film formation temperature:

The minimum film formation temperature (MFFT) of the aqueous polymer composition was measured by applying a thin wet coating on a automatic gradient-heated metal plate ref. Rhopoint MFFT 90 covering the desired temperature range. It is expressed in °C. A low value (<10°C) is desirable so that no coalescing agent (increasing VOC) is required to make a good homogenous film.

### TEST PROTOCOLS FOR DRY COATINGS

The aqueous resins described as examples of the invention were formulated with 1.5 % of Omnirad^{®}500 (photo-initiator) and 2% of Additol^{®} VXW 6360 pre-diluted at 50% in water (thickener) before application. In the case of BAYHYDROL^{®} ECO UV 2877, an additional quantity of 10% butyl cellosolve or 1,2-propanediol (co-solvent) and 0.5% BYK^{®} 028 (wetting agent) was required in order to get a coating with suitable film formation and quality.

### Unsaturation level

The amount of unsaturations in calculated from the bill of materials and refers to the amount of acrylic acid or glycidyl methacrylate present in the polymer. It is expressed in meq/g of the polymer composition.

In the case of Example R1, this information is not available and a titration was used. The titration protocol typically involves the reaction of the activated double bond with morpholine using an aza-Michael addition and followed by the reaction of the excess of morpholine with acetic anhydride (with formation of the amide derivative and acetic acid) and the dual titration of the acetic acid with sodium hydroxide and the tertiary amine with hydrochloric acid.

### Tack before cure

The product is applied as a 50µ wet layer on Leneta^{®} sheet and dried for 5 min at 50°C. After cooling and stabilization at 23°C, the residual tack of the coating is measured by pressing the finger on the coating and assessing the ease to separate the finger without adherence; it is expressed in a scale from 1-5 (5 = no tack).

### Gloss 60°

The gloss of the coating is assessed after application with a Meyer bar of a 50µ wet layer on white Leneta sheet followed by drying during 5 min at 50°C and UV curing at 80 W/cm Hg lamp with 5 m/min conveyer speed. It is measured with a BYK Gardner Micro TRI-gloss gloss-meter in accordance with DIN-67530 standard with a light incidence of 60°. A high gloss value is desirable to provide good aesthetics of the coated substrates.

### Yellowing

The yellowing of the coating is assessed after application with a Meyer bar of a 50µ wet layer on white Leneta sheet followed by drying during 5 min at 50°C and UV curing at 80 W/cm Hg lamp with 5 m/min conveyer speed. The yellowing (b value) is measured using a colorimeter before curing and one hour after curing. The difference in coloration (delta b) is reported. A low yellowing value protects the good aesthetics of the coated substrates.

### Stain resistance

The stain resistance of the coating is assessed after application with a Meyer bar of a 50µ wet layer on white Leneta sheet followed by drying during 5 min at 50°C and UV curing at 80 W/cm Hg lamp with 5 m/min conveyer speed. Stains are applied using a black alcohol marker ref. N70 as well as glass microfiber filter pieces saturated with a test substance placed in contact of the coating during 16 hours. The test substances used are mustard, coffee, eosine, isobetadine, 10% ammonia and 50% ethanol . The stains are washed with a couple of rubs using a tissue saturated with water or isopropanol. The remaining stains are assessed visually using a 1-5 scale, 5 = no residual stain. A high stain resistance is expected to provide the best coating protection against any household product spillage.

### Solvent resistance

The solvent resistance of the coating is assessed after application with a Meyer bar of a 50µ wet layer on white Leneta sheet followed by drying during 5 min at 50°C and UV curing at 80 W/cm Hg lamp with 5 m/min conveyer speed. It is evaluated with acetone double rubs using a cotton rag saturated with the solvent until the coating is being removed. One double rub is equal to a forward and backward stroke. The reported value is the number of double rubs required to break through the cured coating composition. A high solvent resistance is expected to provide the best coating protection against any household product spillage.

### Persoz hardness

The method measures the surface hardness of a wet coating of 120µ applied on glass plate. The coating is dried for 20 minute at 40°C and finally cured under an UV- Hg lamp of 80 W/cm at 5 m/min. The coated samples are stabilized during 24 hours in a conditioned room (20°C and 50% humidity) and the Persoz pendulum hardness is determined at 3 different places on the surface. The mean value is calculated and expressed in seconds. A high Persoz hardness is expected to provide the best coating protection against any storehouse or household deterioration.

### Nail scratch resistance

The nail scratch resistance of the coating is assessed after application with a Meyer bar of a 120µ wet layer on sanded white melamine board and followed by water evaporation for 20' at 40°C followed by UV curing using a 80W/cm Hg lamp at a conveyer speed of 5 m/min. The test is performed after 24 hours in a conditioned room (20°C at 50% humidity) by pressing firmly the nail with a linear movement on the coating and assessing the visual mark or damage resulting from an adhesion loss using a 1-5 scale, 5 = no visible mark or damage. A high nail scratch resistance is expected to provide the best coating protection against any storehouse or household deterioration.

### Pencil hardness

The pencil hardness of the coating is assessed after application with a Meyer bar of a 120µ wet layer on sanded white melamine board and followed by water evaporation for 20' at 40°C followed by UV curing using a 80W/cm Hg lamp at a conveyer speed of 5 m/min. The test is performed after 24 hours in a conditioned room (20°C at 50% humidity) by scratching the cured coating with sharp pencils of increasing hardness using a dedicated metallic holder that fixes the right angle and the uniform pressure applied. The test result is reported as the pencil hardness above which the coating is clearly being damaged. The pencil hardness scale goes from soft to hard as 9B - 8B - 7B - 6B - 5B - 4B - 3B - 2B - 1B - HB - F - 1H - 2H - 3H - 4H - 5H - 6H - 7H - 8H - 9H. A high coating hardness is expected to provide the best coating protection against any storehouse or household deterioration.

### Biogenic carbon content and material carbon footprint reduction:

The biogenic carbon content (%) was determined using ASTM D6866 standard. The sample was dried and transformed catalytically at elevated temperature into graphite, providing the total carbon content of the sample (%). The C14 / C12 isotope ratio of the graphite was measured using accelerated mass spectroscopy and then transposed into biogenic carbon content (%) using a standard of modern oxalic acid as a reference.

The biogenic carbon content is then further transposed into material carbon footprint reduction (g CO₂/kg) corresponding to the equivalent savings of CO₂ released in the atmosphere and assuming the neutrality proposition from equivalent atmospheric CO₂ uptake during plant photosynthesis. Material carbon footprint reduction is used as a quantified sustainability performance of the biopolymer; a high value indicates a stronger sustainability impact.

### Results

Table 1 shows for each of the examples whether the compounds used to make the aqueous bio-based energy-curable polyurethane comprises biocarbon content.

**TABLE 1: POLYMER ARCHITECTURES**

| | Ai | Aii | Aiii | Aiv | Av | Avi | B |
|---|---|---|---|---|---|---|---|
| R2 | O | O | BIO | O | O | / | BIO |
| R3 | O | O | BIO | O | / | / | BIO |
| R4 | O | O | BIO | O | / | / | BIO |
| R5 | BIO | O | BIO | O | / | / | BIO |
| R6 | O | O | BIO | / | BIO | / | BIO |
| R7 | BIO | O | BIO | / | BIO | / | BIO |
| R8 | O | O | BIO | O | BIO | / | BIO |
| 1 | O | O | BIO | BIO | / | / | BIO |
| 2 | O | O | BIO | BIO | / | / | BIO |
| 3 | O | O | BIO | BIO | / | / | BIO |
| 4 | O | O | BIO | BIO | / | / | BIO |
| 5 | O | O | BIO | BIO | / | / | BIO |
| 6 | O | O | BIO | BIO | / | / | BIO |
| 7 | O | O | BIO | BIO | / | / | BIO |
| 8 | BIO | O | BIO | BIO | / | BIO | BIO |

| | | | | | | | |
|---|---|---|---|---|---|---|---|
| / = not present O = present but not from biobased raw materials according to claim 1 BIO = present from biobased raw materials according to claim 1 | | | | | | | |

Table 2 a and b describe for each example and reference example (except for those that are commercially available) the amount of each compound used.

**TABLE 2a-b: DETAILED COMPOSITIONS**

| EXAMPLE: | Corresponding compound | R5 | R6 | R7 | R8 |
|---|---|---|---|---|---|
| | | *LVL252* | *LVL272* | *LVL277* | *LVL298* |
| ACE | solvent | 328.0 | 190.6 | 182.4 | 195.6 |
| MOD1010 | Aiv | 76.2 | - | - | 197.9 |
| NX9201 | Av | - | 218.4 | 149.8 | 158.5 |
| DMPA | Aii | 23.50 | 25.12 | 24.5 | 31.6 |
| MOD450 | Aiii | 156.9 | 170.2 | 134.6 | - |
| MOD706 | Aiii | 38.1 | 41.7 | 32.6 | - |
| NX7202 | Aiii | - | - | - | 54.4 |
| IPDI | Ai | 77.7 | 116.6 | 66.4 | 97.0 |
| HDI | Ai | - | - | - | 47.7 |
| N7300 | Ai | 136.5 | - | 117.2 | - |
| BUTOH | Av | 25.9 | - | 22.2 | - |
| BHT | Inhibitor | 0.45 | 0.40 | 0.77 | 0.37 |
| BiND | Catalyst | 0.35 | 0.32 | 0.30 | 1.05 |
| TEA | Neutralizer | 17.69 | 18.95 | 18.52 | - |
| NaOH 30% | Neutralizer | - | - | - | 30.5 |
| PDA | Avi | 4.62 | 3.38 | 3.52 | - |
| SR4485 | Biocide | 1.60 | 1.70 | 1.63 | 3.00 |
| H2O | | 996 | 1080 | 1031 | 1159 |

| EXAMPLE: | Correspond ing compound | 1 | 2 | 3 | 4 | 5 | 6 | 7 | 8 |
|---|---|---|---|---|---|---|---|---|---|
| | | *IRR 1070* | *LVL34 2* | *LVL3 54* | *LVL36 6* | *LVL37 7* | *LVL36 0* | *LVL36 8* | *LVL36 9* |
| ACE | solvent | 184.7 | 119.7 | 176 | 165.2 | 172.5 | 154.0 | 141.0 | 150.7 |
| IRR1071 | Aiv | 219.1 | 142.0 | 204.5 | 189.0 | 204.5 | 171.8 | - | 121.7 |
| NX7216 | Aiv | - | - | - | - | - | - | 114.1 | - |
| DMPA | Aii | 25.10 | 16.30 | 23.47 | 21.80 | 23.47 | 21.58 | 19.72 | 20.12 |
| N120 | Aii | - | - | - | - | - | 14.80 | - | - |
| MOD450 | Aiii | 140.3 | 90.9 | 130.9 | 121.6 | 130.9 | 121.6 | 130.9 | 93.5 |
| MOD706 | Aiii | 44.6 | 28.9 | - | - | - | 38.7 | 41.7 | 38.3 |
| NX7202 | Aiii | - | - | 52.5 | - | - | - | - | - |
| MOD767 | Aiii | - | - | - | 54.1 | - | - | - | - |
| AE532 | Aiii | - | - | - | - | 41.9 | - | - | - |
| IPDI | Ai | 124.9 | 80.9 | 116.6 | 108.2 | 116.6 | 108.2 | 116.5 | 62.4 |
| N7300 | Ai | - | - | - | - | - | - | - | 97.5 |
| BUTOH | Av | - | - | - | - | - | - | - | 18.5 |
| BHT | Inhibitor | 0.39 | 0.25 | 0.37 | 0.33 | 0.34 | 0.31 | 0.28 | 0.30 |
| BiND | Catalyst | 0.26 | 0.09 | 0.13 | 0.13 | 0.14 | 0.12 | 0.11 | 0.12 |
| TEA | Neutralizer | 19.00 | | 17.71 | 16.44 | 17.71 | 16.28 | 14.87 | 15.18 |
| NaOH 30% | Neutralizer | - | 16.20 | - | - | - | - | - | - |
| PDA | Avi | - | - | - | - | - | - | - | 5.20 |
| SR4485 | Biocide | 1.60 | 1.04 | 1.53 | 1.43 | 1.50 | 1.34 | 1.83 | 1.96 |
| H2O | | 1029 | 667 | 980 | 920 | 961 | 858 | 785 | 840 |

Table 3 a and b show the product characteristics of each example. It is clear that the biobased polyurethane R1 has a high MFFT which is imposing the usage of coalescing agents in order to obtain an acceptable coating quality during application.

**TABLE 3a-b: PRODUCT CHARACTERISTICS**

| EXAMPLE: | R1 | R2 | R3 | R4 | R5 | R6 | R7 | R8 |
|---|---|---|---|---|---|---|---|---|
| Solid content (%) | 39.6 | 40.0 | 38.5 | 33.9 | 34.3 | 34.4 | 34.3 | 34.7 |
| Viscosity (mPa.s) | 81 | 250 | 50 | 63 | 151 | 338 | 1150 | 168 |
| pH | 7.6 | 7.4 | 7.5 | 8.0 | 7.4 | 7.5 | 7.6 | 7.4 |
| Mean particle size (nm) | 156 | 75 | 90 | 78 | 83 | 58 | 47 | 66 |
| MFFT (°C) | 42 | ~ 0 | ~ 0 | ~ 0 | ~ 0 | ~ 0 | ~ 0 | ~ 0 |
| Unsaturations (meq/g polymer) | 0,24 | 1,40 | 3,10 | 3,59 | 2,80 | 2,24 | 1,84 | 2,88 |

| EXAMPLE: | 1 | 2 | 3 | 4 | 5 | 6 | 7 | 8 |
|---|---|---|---|---|---|---|---|---|
| Solid content (%) | 35.0 | 35.9 | 35.2 | 34.9 | 34.8 | 35.4 | 34.5 | 34.8 |
| Viscosity (mPa.s) | 23 | 153 | 24 | 17 | 18 | 66 | 38 | 47 |
| pH | 7.3 | 7.2 | 7.4 | 6.7 | 7.2 | 7.1 | 7.6 | 7.5 |
| Mean particle size (nm) | 84 | 157 | 99 | 74 | 90 | 68 | 68 | 71 |
| MFFT (°C) | ~ 0 | ~ 0 | ~ 0 | ~ 0 | ~ 0 | ~ 0 | ~ 0 | ~ 0 |
| Unsaturations (meq/g polymer) | 3,02 | 3,02 | 2,86 | 2,80 | 2,92 | 2,94 | 3,26 | 2,38 |

Table 4a and b show the coating characteristics and the performances of the examples and the reference examples. It is clear from the table that the coating made with aqueous biobased polyurethane according to invention provides good to excellent coating performances. Especially results on the nail scratch resistance, and acetone double rubs are surprisingly good.

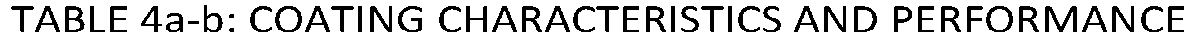

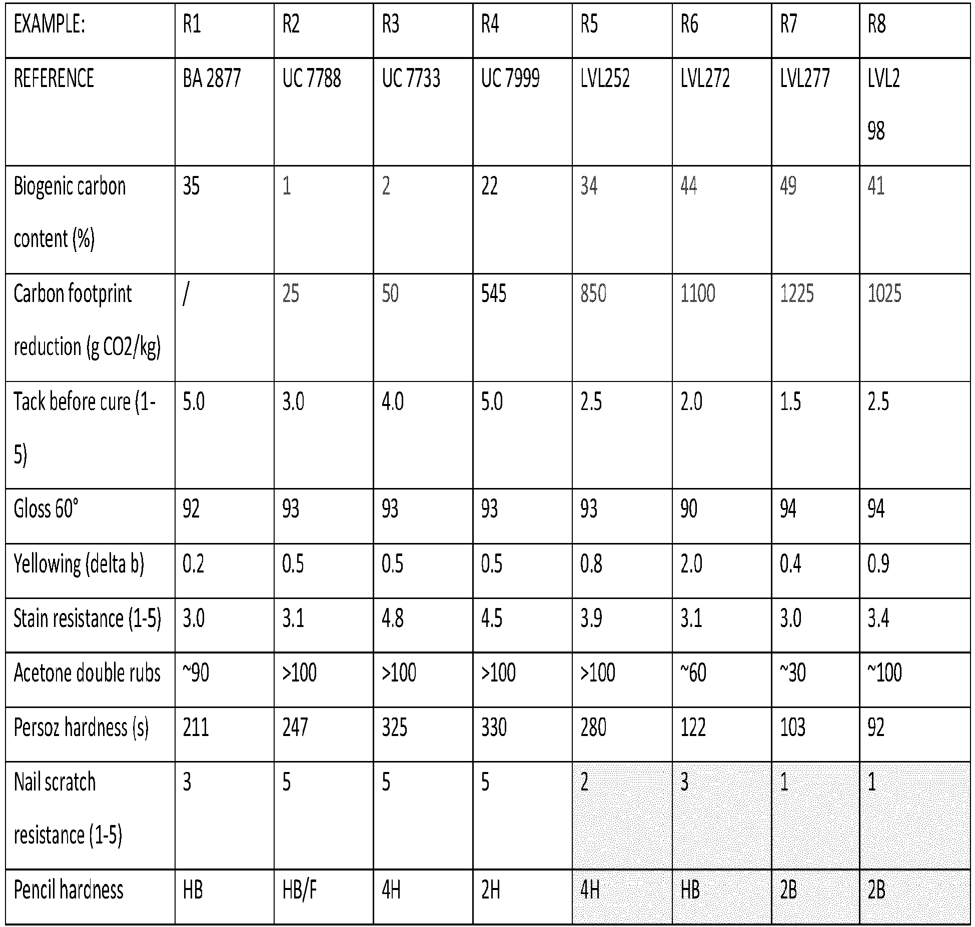

| EXAMPLE: | 1 | 2 | 3 | 4 | 5 | 6 | 7 | 8 |
|---|---|---|---|---|---|---|---|---|
| REFERENCE | IRR 1070 | LVL342 | LVL354 | LVL366 | LVL377 | LVL360 | LVL368 | LVL369 |
| Biogenic carbon content (%) | 46 | 46 | 48 | 47 | 46 | 44 | 33 | 48 |
| Carbon footprint reduction (g CO2/kg) | 1150 | 1150 | 1200 | 1175 | 1150 | 1100 | 825 | 1200 |
| Tack before cure (1-5) | 4.0 | 4.0 | 2.5 | 4.0 | 4.5 | 3.9 | 2.0 | 4.0 |
| Gloss 60° | 91 | 88 | 92 | 90 | 91 | 91 | 97 | 92 |
| Yellowing (delta b) | 0.6 | 0.6 | 0.6 | 0.5 | 0.6 | 0.4 | 0.9 | 0.5 |
| Stain resistance (1-5) | 3.9 | 3.9 | 4.0 | 3.8 | 3.8 | 3.7 | 4.5 | 3.4 |
| Acetone double rubs | >100 | >100 | >100 | >100 | >100 | >100 | >100 | 100 |
| Persoz hardness (s) | 218 | 145 | 112 | 220 | 255 | 147 | 273 | 187 |
| Nail scratch resistance (1-5) | 5 | 5 | 5 | 5 | 5 | 5 | 5 | 5 |
| Pencil harness | 1H | 4H | 2H | 1H | 2H | 2H | 6H | 1H |

## Claims

1. An aqueous bio-based energy-curable polyurethane composition comprising:
at least one ethylenically unsaturated polyurethane pre-polymer (A) obtained from the reaction of:
• at least one aliphatic, cycloaliphatic or aromatic polyisocyanate compound (Ai),
• at least one hydrophilic compound (Aii) containing at least one reactive group capable to react with an isocyanate and which is capable to render the polyurethane pre-polymer dispersible in an aqueous medium either directly or after the reaction with an organic or inorganic neutralizing agent to provide a salt therefrom,
• at least one ethylenically unsaturated compound (Aiii), containing essentially one reactive group capable to react with an isocyanate,
• at least one ethylenically unsaturated compound (Aiv), containing at least two reactive groups capable to react with an isocyanate,
optionally, at least one ethylenically unsaturated compound (B) different from (Aiii) and (Aiv) having no reactive group capable to react with an isocyanate,
wherein the ethylenically unsaturated compounds (Aiii), (Aiv) and (B) have each a biocarbon content of more than 20% by weight of total carbon content of the compound, and are obtained by reacting an ethylenically unsaturated compound with a compound derived from biobased sources, whereby the biocarbon content is determined using ASTM D6866 standard;
wherein the ethylenically unsaturated compounds (Aiv) is prepared with from 0-40wt% bisphenol A; preferably without bisphenol A; and
wherein said composition comprises a total amount of polymerizable ethylenically unsaturated groups of at least 0.5 meq/g expressed per total weight of polyurethane composition, preferably at least 1meq/g, more preferably at least 2meq/g, even more preferably at least 3meq/g and the most preferably at least 4meq/g.

2. The aqueous bio-based energy-curable polyurethane composition according to claim 1, wherein the at least one ethylenically unsaturated polyurethane pre-polymer (A) is obtained from the reaction with
a mono-alcohol or polyol (Av), different from (Ai), (Aii), (Aiii) or (Aiv), having a biocarbon content of more than 20% by weight and containing at least one reactive group capable to react with an isocyanate; and/or
at least one mono-amine or polyamine (Avi), having optionally a biocarbon content of more than 20% by weight and capable to react with an isocyanate.

3. The aqueous bio-based energy curable polyurethane composition according to claim 1 or 2, wherein the polyurethane composition has a MFFT of between 0°C and 20 °C, more preferably between 0°C and 10 °C, most preferably between 0°C and 5°C.

4. The aqueous bio-based energy-curable polyurethane composition according to any one of the preceding claims, wherein the polyurethane composition has a biocarbon content of more than 20%, preferably above 40%, more preferably above 50%, even more preferably above 60%, most preferably above 70%, the most preferably above 80% by weight of the total carbon content of the polyurethane composition.

5. The aqueous bio-based energy-curable polyurethane composition according to any one of the preceding claims, wherein ethylenically unsaturated compound (Aiii), (Aiv) and/or (B) is obtainable by reacting a reactive biobased compound with a compound comprising at least one ethylenically unsaturated function, which is selected from the group consisting of acrylic acid, methacrylic acid, glycidyl (meth)acrylate.

6. The aqueous bio-based energy-curable polyurethane composition according to claim 5 wherein the reactive biobased compound is selected from the group consisting of organic oils or organic oil derivatives, carboxylic acid compounds, fatty acids and derivatives, fatty acid dimers and derivatives, and biobased polyols and derivatives thereof.

7. The aqueous bio-based energy-curable polyurethane composition according to claim 6, wherein the biobased polyol is an aliphatic, cycloaliphatic or aromatic polyols preferably selected from the group consisting of fatty alcohols, fatty alcohol dimers, carbohydrates, sugar alcohols, and/or wherein the biobased polyol derivatives are glycolide, lactide, lactone, poly(alkyleneoxide) derivatives.

8. The aqueous bio-based energy-curable polyurethane composition according to claim 6 or 7, wherein the organic oil derivative is an epoxidized oil selected from the group consisting of epoxidized soybean oil, epoxidized linseed oil, epoxidized castor oil, epoxidized coconut oil, epoxidized corn oil, epoxidized cottonseed oil, epoxidized olive oil, epoxidized palm oil, epoxidized peanut oil, epoxidized sunflower oil, epoxidized safflower oil, epoxidized tall oil, epoxidized cashew shell oil, and/ or the epoxidized fatty acid derived therefrom.

9. The aqueous bio-based energy-curable polyurethane composition according to any one of the preceding claims wherein the amount of reactive groups capable to react with an isocyanate present in the ethylenically unsaturated compound (Aiv) can be controlled by
reacting a portion of the isocyanate reactive groups with a blocking compound capable to react with an isocyanate reactive group; whereby the blocking compound preferably generates a functionality different from the isocyanate reactive group functionality, preferably a carboxylic functionality; and whereby the blocking compound is preferably a cyclic anhydride, most preferably a succinic or maleic anhydride.

10. The aqueous bio-based energy-curable polyurethane composition according to any one of the preceding claims wherein the ethylenically unsaturated compounds (Aiii), (Aiv), and or (B) are obtainable by
• reacting a natural epoxidized oil with an ethylenically unsaturated carboxylic acid compound to obtain an ethylenically unsaturated polyol;
• reacting the ethylenically unsaturated polyol with a cyclic anhydride to obtain an ethylenically unsaturated polyol with at least one carboxylic acid functional group.

11. The aqueous bio-based energy-curable polyurethane composition according to any one of the preceding claims, wherein the ethylenically unsaturated compound (Aiii), (Aiv) and/or (B) is obtainable by reacting a biobased fatty acid or fatty acid dimer with a polyol and a (meth) acrylic acid.

12. The aqueous bio-based energy-curable polyurethane composition according to any one of the claims preceding claims, wherein the ethylenically unsaturated compound (Aiii) has a hydroxyl number of between 20 and 500 mgKOH/g, such as between 40 - 200 mg KOH/g.

13. The aqueous bio-based energy-curable polyurethane composition according to any one of the preceding claims, wherein the ethylenically unsaturated compound (Aiv) has a hydroxyl number of between 20 and 800 mgKOH/g, such as between 40-200 mg KOH/g .

14. The aqueous bio-based energy-curable polyurethane composition according to any one of the preceding claims, wherein the polyisocyanate (Ai) has a biocarbon content of more than 20% by weight, and/or wherein the polyisocyanate (Ai) is based on or derived from pentane diisocyanate.

15. The aqueous bio-based energy-curable polyurethane composition according to any one of the preceding claims, wherein the polyisocyanate (Ai) is added in amount to provide a stoichiometric ratio of isocyanate functional groups in view of groups that are reactable with an isocyanate as present in compound (Aii), (Aiii), (Aiv) and if present (Av) and/or (Avi), from about 0.8:1 to 1.2:1, preferably from about 0.9:1 to 1.1:1, most preferably 1:1.

16. The aqueous bio-based energy-curable polyurethane composition according to any one of the preceding claims, wherein the hydrophilic compound (Aii) has a biocarbon content of more than 20% by weight and/or is a hydroxyl-carboxylic acid compound represented by the general formula (HO)ₓR(COOH)_{y}, wherein R represents a straight or branched aliphatic, cycloaliphatic or aromatic hydrocarbon residue having 1 to 36 carbon atoms, and x and y independently are integers from 1 to 3.

17. The aqueous bio-based energy-curable polyurethane composition according to claim 16, wherein the hydrophilic compound (Aii) is selected from the group consisting of dimethylolpropionic acid, dimethylolbutanoic acid, dimethylolhexanoic acid, glycolic acid, lactic acid, malic acid, tartaric acid or citric acid.

18. The aqueous bio-based energy-curable polyurethane composition according to any one of the preceding claims, wherein the hydrophilic compound (Aii) is a nonionic component selected from the group consisting of a mono or poly-hydroxylated polyethyleneoxide polymer or a mono- or poly-hydroxylated polyethyleneoxide-co-polypropyleneoxide polymer.

19. The aqueous bio-based energy-curable polyurethane composition according to any one of the preceding claims, wherein compound (Av) is a biobased polyol selected from the group consisting of an aliphatic, cycloaliphatic or aromatic diol or polyol, a sugar, a sugar alcohol, a fatty alcohol or a fatty alcohol dimer, a polycarbonate polyol, a polyester polyol, a polyether polyol, a polyacrylate polyol or mixtures thereof.

20. The aqueous bio-based energy-curable polyurethane composition according to any one of the preceding claims, wherein the mono or polyamine compound (Avi) is an aliphatic, cycloaliphatic or aromatic monoamine, diamine or polyamine.

21. A process for making an aqueous bio-based energy-curable polyurethane composition according to any one of the preceding claims, comprising the steps of
(a) formation of an unsaturated polyurethane from compounds (Ai), (Aii), (Aiii), (Aiv) and optionally (Av) and/or (Avi), optionally in the presence of (B), optionally in the presence of a solvent;
(b) optionally, the neutralization of the composition formed in step (a);
(c) dispersing the composition formed in step (a) or (b) in water to form a dispersed unsaturated polyurethane;
(d) optionally, chain extending the dispersed unsaturated polyurethane containing residual isocyanate groups by reacting with compound (Avi); and
(e) optionally, stripping the process solvent under vacuum.

22. A coating, ink or overprint varnish prepared from a composition according to claim 1-20 optionally further comprising additives such as photo-initiators, thermal crosslinkers, wetting agents, rheology modifiers, defoamers, waxes, co-solvents, colorants, pigments or inorganic fillers as well as any other polymer dispersions or emulsions different from the invention.

23. A method for coating a surface with the composition according to any one of the claims 1-20, comprising the steps of:
• applying said composition to the surface,
• thermally drying the applied composition
• energy curing the dried composition using either low energy ultraviolet light (LED) or high-energy ultraviolet light, including excimer light, in the presence of a photo-initiator and/or exposure to high-energy electron beam.

24. Use of the aqueous bio-based energy-curable polyurethane composition according to any one of claim 1-20 for digital printing.

25. Use of the aqueous bio-based energy-curable polyurethane composition according to any one of claim 1-20 for 3D printing technology.

## Patentansprüche

1. Wässerige bio-basierte energiehärtbare Polyurethanzusammensetzung, umfassend:
mindestens ein ethylenisch ungesättigtes Polyurethan-Präpolymer (A), das aus der Reaktion von:
• mindestens einer aliphatischen, cycloaliphatischen oder aromatischen Polyisocyanatverbindung (Ai),
• mindestens einer hydrophilen Verbindung (Aii), die mindestens eine reaktive Gruppe enthält, die mit einem Isocyanat reagieren kann und die das Polyurethan-Präpolymer in einem wässerigen Medium entweder direkt oder nach der Reaktion mit einem organischen oder anorganischen Neutralisationsmittel dispergierbar machen kann, um ein Salz davon bereitzustellen,
• mindestens einer ethylenisch ungesättigten Verbindung (Aiii), die im Wesentlichen eine reaktive Gruppe enthält, die mit einem Isocyanat reagieren kann,
• mindestens einer ethylenisch ungesättigten Verbindung (Aiv), die mindestens zwei reaktive Gruppen enthält, die mit einem Isocyanat reagieren können,
erhalten wird,
gegebenenfalls mindestens eine ethylenisch ungesättigte Verbindung (B), die verschieden ist von (Aiii) und (Aiv) und keine reaktive Gruppe enthält, die mit einem Isocyanat reagieren kann,
wobei die ethylenisch ungesättigten Verbindungen (Aiii), (Aiv) und (B) jeweils einen Biokohlenstoffgehalt von mehr als 20 Gew.-% des Gesamtkohlenstoffgehalts der Verbindung aufweisen und durch Umsetzen einer ethylenisch ungesättigten Verbindung mit einer Verbindung, die aus biobasierten Quellen stammt, erhalten werden, wobei der Biokohlenstoffgehalt unter Anwendung des ASTM D6866-Standards bestimmt wird;
wobei die ethylenisch ungesättigte Verbindung (Aiv) mit 0 - 40 Gew.-% Bisphenol A; vorzugsweise ohne Bisphenol A hergestellt wird; und
wobei die Zusammensetzung eine Gesamtmenge an polymerisierbaren ethylenisch ungesättigten Gruppen von mindestens 0,5 mÄqu./g, ausgedrückt pro Gesamtgewicht an Polyurethanzusammensetzung, vorzugsweise mindestens 1 mÄqu./g, stärker bevorzugt mindestens 2 mÄqu./g, noch stärker bevorzugt mindestens 3 mÄqu.l/g und am stärksten bevorzugt mindestens 4 mÄqu./g umfasst.

2. Wässerige bio-basierte energiehärtbare Polyurethanzusammensetzung nach Anspruch 1, wobei das mindestens eine ethylenisch ungesättigte Polyurethan-Präpolymer (A) aus der Reaktion mit
einem Monoalkohol oder Polyol (Av), der/das verschieden ist von (Ai), (Aii), (Aiii) oder (Aiv), einen Biokohlenstoffgehalt von mehr als 20 Gew.-% aufweist und mindestens eine reaktive Gruppe enthält, die mit einem Isocyanat reagieren kann; und/oder
mindestens einem Monoamin oder Polyamin (Avi), das gegebenenfalls einen Biokohlenstoffgehalt von mehr als 20 Gew.-% aufweist und mit einem Isocyanat reagieren kann
erhalten wird.

3. Wässerige bio-basierte energiehärtbare Polyurethanzusammensetzung nach Anspruch 1 oder 2, wobei die Polyurethanzusammensetzung eine MFFT zwischen 0 °C und 20 °C, stärker bevorzugt zwischen 0 °C und 10 °C, am stärksten bevorzugt zwischen 0 °C und 5 °C aufweist.

4. Wässerige bio-basierte energiehärtbare Polyurethanzusammensetzung nach einem der vorstehenden Ansprüche, wobei die Polyurethanzusammensetzung einen Biokohlenstoffgehalt von mehr als 20 Gew.-%, vorzugsweise über 40 Gew.-%, stärker bevorzugt über 50 Gew.-%, noch stärker bevorzugt über 60 Gew.-%, am stärksten bevorzugt über 70 Gew.-%, am stärksten bevorzugt über 80 Gew.-% des Gesamtkohlenstoffgehalts der Polyurethanzusammensetzung aufweist.

5. Wässerige bio-basierte energiehärtbare Polyurethanzusammensetzung nach einem der vorstehenden Ansprüche, wobei die ethylenisch ungesättigte Verbindung (Aiii), (Aiv) und/oder (B) durch Umsetzen einer reaktiven biobasierten Verbindung mit einer Verbindung, die mindestens eine ethylenisch ungesättigte Funktion umfasst, die aus der Gruppe ausgewählt ist, die aus Acrylsäure, Methacrylsäure, Glycidyl(meth)acrylat besteht, erhalten werden kann.

6. Wässerige bio-basierte energiehärtbare Polyurethanzusammensetzung nach Anspruch 5, wobei die reaktive biobasierte Verbindung aus der Gruppe ausgewählt ist, die aus organischen Ölen oder organischen Öl-Derivaten, Carbonsäureverbindungen, Fettsäuren und Derivaten, Fettsäuredimeren und Derivaten und biobasierten Polyolen und Derivaten davon besteht.

7. Wässerige bio-basierte energiehärtbare Polyurethanzusammensetzung nach Anspruch 6, wobei das biobasierte Polyol ein aliphatisches, cycloaliphatisches oder aromatisches Polyol ist, das vorzugsweise aus der Gruppe ausgewählt ist, die aus Fettalkoholen, Fettalkoholdimeren, Kohlenhydraten, Zuckeralkoholen besteht, und/oder wobei die biobasierten Polyol-Derivate Glycolid-, Lactid-, Lacton-, Poly(alkylenoxid)-Derivate sind.

8. Wässerige bio-basierte energiehärtbare Polyurethanzusammensetzung nach Anspruch 6 oder 7, wobei das organische Öl-Derivat ein epoxidiertes Öl ist, das aus der Gruppe ausgewählt ist, die aus epoxidiertem Sojabohnenöl, epoxidiertem Leinsamenöl, epoxidiertem Rizinusöl, epoxidiertem Kokosöl, epoxidiertem Maisöl, epoxidiertem Baumwollsamenöl, epoxidiertem Olivenöl, epoxidiertem Palmöl, epoxidiertem Erdnussöl, epoxidiertem Sonnenblumenöl, epoxidiertem Safloröl, epoxidiertem Tallöl, epoxidiertem Cashewhülsenöl und/oder der daraus stammenden epoxidierten Fettsäure besteht.

9. Wässerige bio-basierte energiehärtbare Polyurethanzusammensetzung nach einem der vorstehenden Ansprüche, wobei die Menge an reaktiven Gruppen, die mit einem Isocyanat reagieren können und in der ethylenisch ungesättigten Verbindung (Aiv) vorliegen, durch
Umsetzen eines Teils der mit Isocyanat reaktiven Gruppen mit einer Blockierungsverbindung, die mit einer mit Isocyanat reaktiven Gruppe reagieren kann, kontrolliert werden kann; wobei die Blockierungsverbindung vorzugsweise eine Funktionalität, die verschieden ist von der Funktionalität der mit Isocyanat reaktiven Gruppe, vorzugsweise eine Carbonsäurefunktionalität, erzeugt; und wobei die Blockierungsverbindung vorzugsweise ein cyclisches Anhydrid, am stärksten bevorzugt ein Bernsteinsäure- oder Maleinsäureanhydrid ist.

10. Wässerige bio-basierte energiehärtbare Polyurethanzusammensetzung nach einem der vorstehenden Ansprüche, wobei die ethylenisch ungesättigten Verbindungen (Aiii), (Aiv), und/oder (B) durch
• Umsetzen eines natürlichen epoxidierten Öls mit einer ethylenisch ungesättigten Carbonsäureverbindung unter Erhalt eines ethylenisch ungesättigten Polyols;
• Umsetzen des ethylenisch ungesättigten Polyols mit einem cyclischen Anhydrid unter Erhalt eines ethylenisch ungesättigten Polyols mit mindestens einer carbonsäurefunktionellen Gruppe
erhalten werden kann.

11. Wässerige bio-basierte energiehärtbare Polyurethanzusammensetzung nach einem der vorstehenden Ansprüche, wobei die ethylenisch ungesättigte Verbindung (Aiii), (Aiv) und/oder (B) durch Umsetzen einer biobasierten Fettsäure oder eines biobasierten Fettsäuredimers mit einem Polyol und einer (Meth)acrylsäure erhalten werden kann.

12. Wässerige bio-basierte energiehärtbare Polyurethanzusammensetzung nach einem der vorstehenden Ansprüche, wobei die ethylenisch ungesättigte Verbindung (Aiii) eine Hydroxylzahl zwischen 20 und 500 mgKOH/g, wie zwischen 40 und 200 mgKOH/g aufweist.

13. Wässerige bio-basierte energiehärtbare Polyurethanzusammensetzung nach einem der vorstehenden Ansprüche, wobei die ethylenisch ungesättigte Verbindung (Aiv) eine Hydroxylzahl zwischen 20 und 800 mgKOH/g, wie zwischen 40 und 200 mgKOH/g aufweist.

14. Wässerige bio-basierte energiehärtbare Polyurethanzusammensetzung nach einem der vorstehenden Ansprüche, wobei das Polyisocyanat (Ai) einen Biokohlenstoffgehalt von mehr als 20 Gew.-% aufweist, und/oder wobei das Polyisocyanat (Ai) auf Pentandiisocyanat basiert oder daraus stammt.

15. Wässerige bio-basierte energiehärtbare Polyurethanzusammensetzung nach einem der vorstehenden Ansprüche, wobei das Polyisocyanat (Ai) in einer Menge zugegeben wird, dass ein stöchiometrisches Verhältnis von isocyanatfunktionellen Gruppen hinsichtlich Gruppen, die mit einem Isocyanat reagieren können, wie in Verbindung (Aii), (Aiii), (Aiv) und, wenn vorhanden (Av) und/oder (Avi), vorhanden, von etwa 0,8 : 1 bis 1,2 : 1, vorzugsweise von etwa 0,9 : 1 bis 1,1 : 1, am stärksten bevorzugt 1 : 1 bereitgestellt wird.

16. Wässerige bio-basierte energiehärtbare Polyurethanzusammensetzung nach einem der vorstehenden Ansprüche, wobei die hydrophile Verbindung (Aii) einen Biokohlenstoffgehalt von mehr als 20 Gew.-% aufweist und/oder eine Hydroxyl-Carbonsäureverbindung ist, dargestellt durch die allgemeine Formel (HO)ₓR(COOH)_{y}, wobei R einen geraden oder verzweigten aliphatischen, cycloaliphatischen oder aromatischen Kohlenwasserstoffrest mit 1 bis 36 Kohlenstoffatomen darstellt und x und y unabhängig voneinander ganze Zahlen von 1 bis 3 sind.

17. Wässerige bio-basierte energiehärtbare Polyurethanzusammensetzung nach Anspruch 16, wobei die hydrophile Verbindung (Aii) aus der Gruppe ausgewählt ist, die aus Dimethylolpropionsäure, Dimethylolbutansäure, Dimethylolhexansäure, Glycolsäure, Milchsäure, Äpfelsäure, Weinsäure oder Zitronensäure besteht.

18. Wässerige bio-basierte energiehärtbare Polyurethanzusammensetzung nach einem der vorstehenden Ansprüche, wobei die hydrophile Verbindung (Aii) eine nicht-ionische Komponente ist, die aus der Gruppe ausgewählt ist, die aus einem mono- oder poly-hydroxylierten Polyethylenoxidpolymer oder einem mono- oder poly-hydroxylierten Polyethylenoxid-Co-Polypropylenoxidpolymer besteht.

19. Wässerige bio-basierte energiehärtbare Polyurethanzusammensetzung nach einem der vorstehenden Ansprüche, wobei Verbindung (Av) ein biobasiertes Polyol ist, das aus der Gruppe ausgewählt ist, die aus einem aliphatischen, cycloaliphatischen oder aromatischen Diol oder Polyol, einem Zucker, einem Zuckeralkohol, einem Fettalkohol oder einem Fettalkoholdimer, einem Polycarbonatpolyol, einem Polyesterpolyol, einem Polyetherpolyol, einem Polyacrylatpolyol oder Gemischen davon besteht.

20. Wässerige bio-basierte energiehärtbare Polyurethanzusammensetzung nach einem der vorstehenden Ansprüche, wobei die Mono- oder Polyaminverbindung (Avi) ein aliphatisches, cycloaliphatisches oder aromatisches Monoamin, Diamin oder Polyamin ist.

21. Verfahren zum Herstellen einer wässerigen bio-basierten energiehärtbaren Polyurethanzusammensetzung nach einem der vorstehenden Ansprüche, umfassend die Schritte
(a) Bildung eines ungesättigten Polyurethans aus Verbindungen (Ai), (Aii), (Aiii), (Aiv) und gegebenenfalls (Av) und/oder (Avi), gegebenenfalls in der Gegenwart von (B), gegebenenfalls in der Gegenwart eines Lösungsmittels;
(b) gegebenenfalls die Neutralisation der in Schritt (a) gebildeten Zusammensetzung;
(c) Dispergieren der in Schritt (a) oder (b) gebildeten Zusammensetzung in Wasser unter Bildung eines dispergierten ungesättigten Polyurethans;
(d) gegebenenfalls Kettenverlängern des dispergierten ungesättigten Polyurethans, das restliche Isocyanatgruppen enthält, durch Umsetzen mit Verbindung (Avi); und
(e) gegebenenfalls Abziehen des Prozesslösungsmittels unter Vakuum.

22. Beschichtung, Tinte oder Aufdrucklack, hergestellt aus einer Zusammensetzung nach Anspruch 1-20, gegebenenfalls ferner umfassend Additive, wie Photoinitiatoren, thermische Vernetzer, Benetzungsmittel, Rheologiemodifikatoren, Entschäumer, Wachse, Co-Lösungsmittel, Färbemittel, Pigmente oder anorganische Füllstoffe, sowie andere Polymerdispersionen oder -emulsionen, die verschieden sind von der Erfindung.

23. Verfahren zum Beschichten einer Oberfläche mit der Zusammensetzung nach einem der Ansprüche 1-20, umfassend die Schritte:
• Aufbringen der Zusammensetzung auf die Oberfläche,
• thermisches Trocken der aufgebrachten Zusammensetzung,
• Energiehärten der getrockneten Zusammensetzung unter Verwendung von entweder niederenergetischem ultraviolettem Licht (LED) oder hochenergetischem ultraviolettem Licht, einschließlich Excimer-Licht, in der Gegenwart eines Photoinitiators und/oder Aussetzen einem energiereichem Elektronenstrahl.

24. Verwendung der wässerigen bio-basierten energiehärtbaren Polyurethanzusammensetzung nach einem von Anspruch 1 - 20 für Digitaldruck.

25. Verwendung der wässerigen bio-basierten energiehärtbaren Polyurethanzusammensetzung nach einem von Anspruch 1 - 20 für 3D-Drucktechnologie.

## Revendications

1. Composition aqueuse de polyuréthane durcissable par énergie d'origine végétale comprenant :
au moins un prépolymère de polyuréthane éthyléniquement insaturé (A) obtenu à partir de la réaction de :
• au moins un composé de polyisocyanate aliphatique, cycloaliphatique ou aromatique (Ai),
• au moins un composé hydrophile (Aii) contenant au moins un groupe réactif capable de réagir avec un isocyanate et qui est capable de rendre le prépolymère de polyuréthane dispersible dans un milieu aqueux soit directement, soit après la réaction avec un agent de neutralisation organique ou inorganique pour fournir un sel de celui-ci,
• au moins un composé éthyléniquement insaturé (Aiii), contenant essentiellement un groupe réactif capable de réagir avec un isocyanate,
• au moins un composé éthyléniquement insaturé (Aiv), contenant au moins deux groupes réactifs capables de réagir avec un isocyanate,
éventuellement, au moins un composé éthyléniquement insaturé (B) différent de (Aiii) et (Aiv) n'ayant pas de groupe réactif capable de réagir avec un isocyanate,
les composés éthyléniquement insaturés (Aiii), (Aiv) et (B) ayant chacun une teneur en biocarbone supérieure à 20 % en poids d'une teneur totale en carbone du composé, et étant obtenus par mise en réaction d'un composé éthyléniquement insaturé avec un composé issu de sources d'origine biologique, moyennant quoi la teneur en biocarbone est déterminée en utilisant la norme ASTM D6866 ;
les composés éthyléniquement insaturés (Aiv) étant préparés avec de 0 à 40 % en poids de bisphénol A ; préférablement sans bisphénol A ; et
ladite composition comprenant une quantité totale de groupes éthyléniquement insaturés polymérisables d'au moins 0,5 méq/g exprimée par poids total de la composition de polyuréthane, préférablement au moins 1 méq/g, plus préférablement au moins 2 méq/g, encore plus préférablement au moins 3 méq/g et le plus préférablement au moins 4 méq/g.

2. Composition aqueuse de polyuréthane durcissable par énergie d'origine biologique selon la revendication 1, l'au moins un prépolymère de polyuréthane éthyléniquement insaturé (A) étant obtenu à partir de la réaction avec
un monoalcool ou polyol (Av) différent de (Ai), (Aii), (Aiii) ou (Aiv), ayant une teneur en biocarbone supérieure à 20 % en poids et contenant au moins un groupe réactif capable de réagir avec un isocyanate ; et/ou
au moins une monoamine ou polyamine (Avi), ayant éventuellement une teneur en biocarbone supérieure à 20 % en poids et capable de réagir avec un isocyanate.

3. Composition aqueuse de polyuréthane durcissable par énergie d'origine biologique selon la revendication 1 ou 2, la composition de polyuréthane ayant un MFFT compris entre 0 °C et 20 °C, plus préférablement entre 0 °C et 10 °C, le plus préférablement entre 0 °C et 5 °C.

4. Composition aqueuse de polyuréthane durcissable par énergie d'origine biologique selon l'une quelconque des revendications précédentes, la composition de polyuréthane ayant une teneur en biocarbone supérieure à 20 %, préférablement supérieure à 40 %, plus préférablement supérieure à 50 %, encore plus préférablement supérieure à 60 %, le plus préférablement supérieure à 70 %, le plus préférablement supérieure à 80 % en poids de la teneur totale en carbone de la composition de polyuréthane.

5. Composition aqueuse de polyuréthane durcissable par énergie d'origine biologique selon une quelconque revendication précédente, le composé éthyléniquement insaturé (Aiii), (Aiv) et/ou (B) étant obtenu par mise en réaction d'un composé d'origine biologique réactif avec un composé comprenant au moins une fonction éthyléniquement insaturée, qui est choisi dans le groupe constitué par l'acide acrylique, l'acide méthacrylique, un (méth)acrylate de glycidyle.

6. Composition aqueuse de polyuréthane durcissable par énergie d'origine biologique selon la revendication 5, le composé d'origine biologique réactif étant choisi dans le groupe constitué par des huiles organiques ou des dérivés d'huiles organiques, des composés d'acide carboxylique, des acides gras et des dérivés, des dimères d'acides gras et des dérivés, et des polyols d'origine biologique et des dérivés correspondants.

7. Composition aqueuse de polyuréthane durcissable par énergie d'origine biologique selon la revendication 6, le polyol d'origine biologique étant un polyol aliphatique, cycloaliphatique ou aromatique préférablement choisi dans le groupe constitué par des alcools gras, des dimères d'alcools gras, des glucides, des alcools de sucre et/ou les dérivés de polyols d'origine biologique étant des dérivés de glycolide, de lactide, de lactone, de poly(oxyde d'alkylène).

8. Composition aqueuse de polyuréthane durcissable par énergie d'origine biologique selon la revendication 6 ou 7, le dérivé d'huile organique étant une huile époxydée choisie dans le groupe constitué par une huile de soja époxydée, une huile de graines de lin époxydée, une huile de ricin époxydée, une huile de noix de coco époxydée, une huile de maïs époxydée, une huile de graines de coton époxydée, une huile d'olive époxydée, une huile de palme époxydée, une huile d'arachide époxydée, une huile de tournesol époxydée, une huile de carthame époxydée, une tallöl époxydée, une huile de coquilles de noix de cajou époxydée et/ou le dérivé d'acide gras époxydé correspondant.

9. Composition aqueuse de polyuréthane durcissable par énergie d'origine biologique selon l'une quelconque des revendications précédentes, la quantité de groupes réactifs capables de réagir avec un isocyanate présents dans le composé éthyléniquement insaturé (Aiv) pouvant être régulée par
mise en réaction d'une partie des groupes réactifs envers un isocyanate avec un composé bloquant capable de réagir avec un groupe réactif envers un isocyanate ; moyennant quoi le composé bloquant générant préférablement une fonctionnalité différente de la fonctionnalité du groupe réactif envers un isocyanate, préférablement une fonctionnalité carboxylique ; et moyennant quoi le composé bloquant étant préférablement un anhydride cyclique, le plus préférablement un anhydride succinique ou maléique.

10. Composition aqueuse de polyuréthane durcissable par énergie d'origine biologique selon l'une quelconque des revendications précédentes, les composés éthyléniquement insaturés (Aiii), (Aiv) et/ou (B) pouvant être obtenus par
• mise en réaction d'une huile époxydée naturelle avec un composé d'acide carboxylique éthyléniquement insaturé pour obtenir un polyol éthyléniquement insaturé ;
• mise en réaction du polyol éthyléniquement insaturé avec un anhydride cyclique pour obtenir un polyol éthyléniquement insaturé comportant au moins un groupe fonctionnel acide carboxylique.

11. Composition aqueuse de polyuréthane durcissable par énergie d'origine biologique selon l'une quelconque des revendications précédentes, le composé éthyléniquement insaturé (Aiii), (Aiv) et/ou (B) pouvant être obtenu par mise en réaction d'un acide gras ou d'un dimère d'acides gras d'origine biologique avec un polyol et un acide (méth)acrylique.

12. Composition aqueuse de polyuréthane durcissable par énergie d'origine biologique selon l'une quelconque des revendications précédentes, le composé éthyléniquement insaturé (Aiii) ayant un indice d'hydroxyle compris entre 20 et 500 mg de KOH/g, tel qu'entre 40 et 200 mg de KOH/g.

13. Composition aqueuse de polyuréthane durcissable par énergie d'origine biologique selon l'une quelconque des revendications précédentes, le composé éthyléniquement insaturé (Aiv) ayant un indice d'hydroxyle compris entre 20 et 800 mg de KOH/g, tel qu'entre 40 et 200 mg de KOH/g.

14. Composition aqueuse de polyuréthane durcissable par énergie d'origine biologique selon l'une quelconque des revendications précédentes, le polyisocyanate (Ai) ayant une teneur en biocarbone supérieure à 20 % en poids, et/ou le polyisocyanate (Ai) étant basé sur un ou issu d'un diisocyanate de pentane.

15. Composition aqueuse de polyuréthane durcissable par énergie d'origine biologique selon l'une quelconque des revendications précédentes, le polyisocyanate (Ai) étant ajouté en une quantité pour fournir un rapport stoechiométrique de groupes fonctionnels isocyanate par rapport à des groupes qui peuvent réagir avec un isocyanate comme présents dans un composé (Aii), (Aiii), (Aiv) et, s'il est présent (Av) et/ou (Avi), d'environ 0,8 : 1 à 1,2 : 1, préférablement d'environ 0,9 : 1 à 1,1 : 1, le plus préférablement 1 : 1.

16. Composition aqueuse de polyuréthane durcissable par énergie d'origine biologique selon l'une quelconque des revendications précédentes, le composé hydrophile (Aii) ayant une teneur en biocarbone supérieure à 20 % en poids et/ou étant un composé d'acide hydroxyl-carboxylique représenté par la formule générale (HO)ₓR(COOH)_{y}, R représentant un radical hydrocarboné aliphatique linéaire ou ramifié, cycloaliphatique ou aromatique ayant 1 à 36 atomes de carbone, et x et y étant indépendamment des entiers de 1 à 3.

17. Composition aqueuse de polyuréthane durcissable par énergie d'origine biologique selon la revendication 16, le composé hydrophile (Aii) étant choisi dans le groupe constitué par l'acide diméthylolpropionique, l'acide diméthylolbutanoïque, l'acide diméthylolhexanoïque, l'acide glycolique, l'acide lactique, l'acide malique, l'acide tartrique ou l'acide citrique.

18. Composition aqueuse de polyuréthane durcissable par énergie d'origine biologique selon l'une quelconque des revendications précédentes, le composé hydrophile (Aii) étant un composant non ionique choisi dans le groupe constitué par un polymère de poly(oxyde d'éthylène) monohydroxylé ou polyhydroxylé ou un polymère de poly(oxyde d'éthylène)-co-poly(oxyde de propylène) monohydroxylé ou polyhydroxylé.

19. Composition aqueuse de polyuréthane durcissable par énergie d'origine biologique selon l'une quelconque des revendications précédentes, le composé (Av) étant un polyol d'origine biologique choisi dans le groupe constitué par diol ou polyol aliphatique, cycloaliphatique ou aromatique, un sucre, un alcool de sucre, un alcool gras ou un dimère d'alcools gras, un polycarbonate polyol, un polyester polyol, un polyéther polyol, un polyacrylate polyol ou des mélanges correspondants.

20. Composition aqueuse de polyuréthane durcissable par énergie d'origine biologique selon l'une quelconque des revendications précédentes, le composé de monoamine ou polyamine (Avi) étant une monoamine, une diamine ou une polyamine aliphatique, cycloaliphatique ou aromatique.

21. Procédé pour la préparation d'une composition aqueuse de polyuréthane durcissable par énergie d'origine biologique selon l'une quelconque des revendications précédentes, comprenant les étapes de
(a) formation d'un polyuréthane insaturé à partir des composés (Ai), (Aii), (Aiii), (Aiv) et éventuellement (Av) et/ou (Avi), éventuellement la présence de (B), éventuellement en la présence d'un solvant ;
(b) éventuellement, neutralisation de la composition formée dans l'étape (a) ;
(c) dispersion de la composition formée dans l'étape (a) ou (b) dans de l'eau pour former un polyuréthane insaturé dispersé ;
(d) éventuellement, extension de chaînes du polyuréthane insaturé dispersé contenant des groupes isocyanate résiduels par mise en réaction avec un composé (Avi) ; et
(e) éventuellement, strippage du solvant de procédé sous vide.

22. Revêtement, encre ou vernis de surimpression préparé(e) à partir d'une composition selon les revendications 1 à 20 comprenant en outre éventuellement des additifs tels que des photoinitiateurs, des agents de réticulation thermique, des agents mouillants, des agents de modification de la rhéologie, des antimousses, des cires, des cosolvants, des matières colorantes, des pigments ou des charges inorganiques ainsi que de quelconques autres dispersions ou émulsions de polymère différentes de l'invention.

23. Procédé pour le revêtement d'une surface par la composition selon l'une quelconque des revendications 1 à 20, comprenant les étapes de :
• application de ladite composition sur la surface,
• séchage thermiquement de la composition appliquée
• durcissement par énergie de la composition séchée en utilisant soit de la lumière ultraviolette à basse énergie (LED), soit de la lumière ultraviolette à haute énergie, y compris de la lumière d'excimère, en la présence d'un photoinitiateur et/ou exposition à un faisceau d'électrons à haute énergie.

24. Utilisation de la composition aqueuse de polyuréthane durcissable par énergie d'origine biologique selon l'une quelconque des revendications 1 à 20 pour une impression numérique.

25. Utilisation de la composition aqueuse de polyuréthane durcissable par énergie d'origine biologique selon l'une quelconque des revendications 1 à 20 pour une technologie d'impression en 3D.
